# EUROPEAN PATENT SPECIFICATION

(11) **EP 3 502 813 B1**
(45) Date of publication and mention of the grant of the patent: **13.04.2022**
(21) Application number: 18199598.6
(22) Date of filing: 10.10.2018
(51) Int. Cl.: G05B 19/042

(54) **CONTROL SYSTEM AND CONTROL DEVICE**
STEUERUNGSSYSTEM UND STEUERUNGSVORRICHTUNG
SYSTÈME ET DISPOSITIF DE COMMANDE

(30) Priority: 25.12.2017 JP 2017247373
(43) Date of publication of application: 26.06.2019
(73) Proprietor: OMRON CORPORATION, Kyoto-shi, Kyoto 600-8530 (JP)
(72) Inventor: MAEKAWA, Norihiro, Kyoto-shi, Kyoto 600-8530 (JP); TAHARA, Yutaka, Kyoto-shi, Kyoto 600-8530 (JP); MIYAKE, Kazunari, Kyoto-shi, Kyoto 600-8530 (JP); KARASUYAMA, Koji, Kyoto-shi, Kyoto 600-8530 (JP); IKEO, Yuji, Kyoto-shi, Kyoto 600-8530 (JP); FUJIMURA, Ryosuke, Kyoto-shi, Kyoto 600-8530 (JP)
(74) Representative: Becker Kurig & Partner Patentanwälte mbB

(56) References cited:
- US-A1- 2010 165 878
- US-B2- 9 639 077

## Description

### BACKGROUND

### Technical Field

The present technology relates to a control system and a control device which controls a control target.

### Description of Related Art

A programmable controller (PLC), etc., is used as a control device for controlling various facilities and manufacturing apparatuses. Further, there is a safety system including a safety controller and various safety components.

With the advancement of information and communication technology (ICT), networking of such industrial controllers is ongoing. In a known configuration, for example, a communication unit in charge of communication processing is provided in addition to a CPU unit which executes arithmetic processing, as disclosed in Patent Document 1 (Japanese Unexamined Patent Application Publication No. 2009-223398). In general, a communication module which is an example of an IO module is provided separately from a CPU module to perform communication processing, as disclosed in Patent Document 2 (Japanese Unexamined Patent Application Publication No. 2017-027539).

US 2010/165878 A1 discloses apparatuses, systems, and computer readable media for protecting a PLC and plant network against unauthorized access and for providing robust intended communication.

US 9639077 B2 discloses a control device performing priority-dependent data transmission through a communication line and a control method aimed at the priority-dependent data transmission. The control device includes a transmitter that transmits data as a frame to another unit through the communication line and a generator that generates the data to be transmitted to another unit.

### SUMMARY

In the configuration as disclosed in the aforementioned Patent Document 2, a CPU module and a communication module need to be provided one for one basically and thus a plurality of communication modules need to be prepared when a plurality of CPU modules perform communication processing.

Accordingly, there is a need for a configuration capable of flexibly realizing communication processing without requiring additional units even when a plurality of units having a communication function are present.

The present invention is provided by the appended claims. The following disclosure serves a better understanding of the invention. A control system according to an embodiment of the present invention controls a control target. The control system includes a (first unit) control device having a first communication port configured for transmitting and receiving data and one or a plurality of (second units) communication units electrically connected to the first unit. Each of the communication units includes a logical communication unit configured for transmitting/receiving data to/from a plurality of devices electrically connected to the first communication port of the first unit. The control device includes a forwarding processing unit which is configured to forward transmission data transmitted from the communication unit to a device which is a transmission data transmission destination.

According to this disclosure, the one or more communication units as well as the control device can use the one communication port included in the control device, and thus it is possible to achieve high functionality of the communication units while simplifying a system configuration.

In the above-described disclosure, the forwarding processing unit may forward reception data received from any device to the communication unit which is a reception data transmission destination of the reception data.

According to this disclosure, it is possible not only to transmit data from the communication unit but also to receive data from any device.

In the above-described disclosure, the control device and the one or the plurality of the communication units may include data communication units for performing data exchange in each predetermined period. When transmission data to be newly transmitted is generated, the logical communication unit may add control information having different contents from control information added to previously generated transmission data, and perform data exchange with the control device.

According to this disclosure, processes can be performed between the control device and the communication units particularly when data is newly generated and/or when data is newly received even in a configuration in which data exchange is performed in each predetermined period irrespective of whether data is updated. Accordingly, it is possible to prevent processes from being complicated while maintaining high response performance.

In the above-described disclosure, when transmission data to be newly transmitted is generated, the logical communication unit may generate new control information by incrementing or decrementing a value of the control information added to the previously generated transmission data.

According to this disclosure, the generation of new transmission data can be detected according to increment or decrement of control information.

In the above-described disclosure, the control device may include a first storage region in which data exchanged with the one or the plurality of the communication units is stored and a second storage region in which data transmitted/received to/from the device through the first communication port is stored. The forwarding processing unit may perform data exchange between the first storage region and the second storage region according to predetermined data exchange information.

According to this disclosure, only data transmitted/received to/from a device among data exchanged between the first unit and the one or more second units can be efficiently exchanged. Consequently, it is possible to prevent processes in the first unit from being complicated.

In the above-described disclosure, when reception data is received from any device, the forwarding processing unit may add control information having different contents from control information added to previously received reception data to the received reception data and perform data exchange with the second unit which is a transmission destination of the reception data.

According to this disclosure, the one or more second units can immediately detect that the first unit has newly received new reception data from any device.

In the above-described disclosure, the first unit may further have a second communication port that is for transmitting/receiving data and different from the first communication port. A communication protocol for transmitting and receiving data through the first communication port may differ from a communication protocol for transmitting and receiving data through the second communication port.

According to this disclosure, it is possible to realize various applications by selectively using a plurality of communication ports provided in the first unit.

In the above-described disclosure, the first unit may further include a third storage region in which data transmitted/received to/from the device through the second communication port is stored. The forwarding processing unit may selectively exchange data of the first storage region between the second storage region and the third storage region according to predetermined data exchange information.

According to this disclosure, it is possible to transmit data using an appropriate communication protocol and an appropriate device which is a transmission destination at the request of a second unit which has generated the data.

In the above-described disclosure, the first unit may further include a third storage region in which data transmitted/received to/from the device through the second communication port is stored. The forwarding processing unit may perform data exchange between the second storage region and the third storage region according to predetermined data exchange information.

According to another embodiment of the present invention, a control device constituting a control system for controlling a control target is provided. The control device includes a communication port for transmitting and receiving data and a data communication unit for performing data exchange with one or more communication units in each predetermined period. Each of the communication units includes a logical communication unit for transmitting/receiving data to/from a device electrically connected to the communication port. The control device includes a forwarding processing unit which forwards transmission data transmitted from the communication unit to the device which is a transmission destination.

According to this invention, the one or more second units as well as the first unit can use the one communication port included in the first unit, and thus it is possible to achieve high functionality of the second units while simplifying a system configuration.

According to embodiments of the present invention, it is possible to flexibly realize communication processing without requiring additional units even when a plurality of units having a communication function are present.

### BRIEF DESCRIPTION OF THE DRAWINGS

FIG. 1 is a schematic diagram showing an example of a configuration of a control system according to a technology related to the present invention.
FIG. 2 is a schematic diagram showing an example of a configuration of a control system according to the present embodiment.
FIG. 3 is a schematic diagram showing a connection configuration between units of the control system according to the present embodiment.
FIG. 4 is a schematic diagram showing an example of a hardware configuration of a CPU included in the control system according to the present embodiment.
FIG. 5 is a schematic diagram showing an example of a hardware configuration of a communication unit included in the control system according to the present embodiment.
FIG. 6 is a schematic diagram showing an example of a connection configuration between the CPU and the communication unit in the control system according to the present embodiment.
FIG. 7 is a schematic diagram showing an example of memory layouts in shared memories of the CPU according to the present embodiment.
FIG. 8 is a schematic diagram showing an example of the contents of data exchange information stored in the CPU according to the present embodiment.
FIG. 9 is a schematic diagram for describing a communication frame transmission process in the control system according to the present embodiment.
FIG. 10 is a schematic diagram for describing a communication frame transmission process in the CPU of the control system according to the present embodiment.
FIG. 11 is a flowchart showing a processing procedure of the communication frame transmission process in the control system according to the present embodiment.
FIG. 12 is a schematic diagram for describing a communication frame reception process in the control system according to the present embodiment.
FIG. 13 is a schematic diagram for describing a communication frame reception process in the CPU of the control system according to the present embodiment.
FIG. 14 is a flowchart showing a processing procedure of the communication frame reception process in the control system according to the present embodiment.
FIG. 15 is a schematic diagram showing an example of a configuration of a control system according to a first modified example of the present embodiment.
FIG. 16 is a schematic diagram showing an example of connection configuration between a CPU and a communication unit in the control system according to the first modified example of the present embodiment.
FIG. 17 is a schematic diagram showing an example of the contents of data exchange information stored in the CPU according to the first modified example of the present embodiment.
FIG. 18 is a schematic diagram showing an example of a configuration of a control system according to a second modified example of the present embodiment.
FIG. 19 is a schematic diagram showing an example of connection configuration in a CPU in the control system according to the second modified example of the present embodiment.
FIG. 20 is a schematic diagram showing an example of a configuration of a control system according to a third modified example of the present embodiment.
FIG. 21 is a diagram showing an example of a set user interface in the control system according to the present embodiment.

### DESCRIPTION OF THE EMBODIMENTS

Embodiments of the present invention will be described with reference to the drawings. The same or corresponding parts in the figures are denoted by the same reference signs and description thereof will not be repeated.

### <A. Example of application>

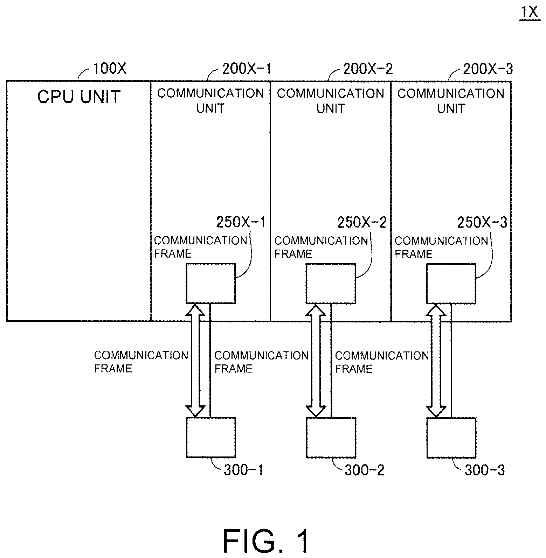

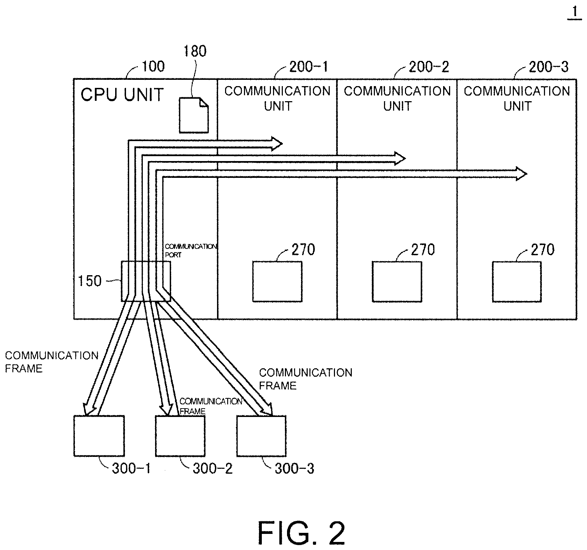

First, an example of a situation to which the present invention may be applied will be described with reference to FIGS. 1 and 2.

FIG. 1 is a schematic diagram showing an example of a configuration of a control system 1X according to the technology related to the present invention. FIG. 2 is a schematic diagram showing an example of a configuration of a control system 1 according to the present embodiment.

For comparison, the control system 1X according to the technology related to the present invention will be described first. Referring to FIG. 1, the control system 1X includes a CPU unit 100X and a plurality of communication units 200X -1, 200X-2 and 200X-3 (collectively referred to as a "communication unit 200X" hereinafter).

Regarding the configuration of the control system 1X shown in FIG. 1, it is assumed that communication processing is performed between three communication devices 300-1, 300-2 and 300-3 (collectively referred to as a "communication device 300" hereinafter).

The CPU unit 100X is equivalent to an arithmetic processing unit which executes a control program for calculating command values for a control target. The communication units 200X-1, 200X-2 and 200X-3 are examples of the communication unit, and respectively execute a process of transmitting/receiving data such as a communication frame to/from the communication devices 300-1, 300-2 and 300-3. The communication units 200X-1, 200X-2 and 200X-3 respectively have communication ports 250X-1, 250X-2 and 250X-3 for transmitting/receiving data.

In this manner, the control system 1X shown in FIG. 1 employs a configuration in which one or a plurality of communication units 200X respectively having communication ports are connected to the CPU unit 100X. A configuration in which data is transmitted and received between each communication unit 200X and a communication device 300 which is a connection target is employed. When the configuration of the control system 1X as shown in FIG. 1 is employed, the following problems may be generated.
(1) Since circuit components necessary for communication processing including the communication port of each communication unit 200X are operated, hardware costs increase.
(2) When a communication function needs to be realized in each communication unit 200X and corresponds to a plurality of communication protocols, development costs and development time for each communication unit 200X increase.

With respect to these problems, the control system 1 according to the present embodiment provides an environment in which a communication function of a specific unit can be used by other units. That is, a communication function of a specific unit is shared with other units to solve the aforementioned problems which may be generated in the control system 1X according to the technology related to the present invention.

More specifically, referring to FIG. 2, the control system 1 includes a CPU unit 100 for controlling a control target, and one or a plurality of communication units 200-1, 200-2 and 200-3 (collectively referred to as a "communication unit 200" hereinafter) electrically connected to the CPU unit 100.

In the present description, "communication unit" includes a unit in which at least logical communication processing for transmitting/receiving data to/from a communication target (communication device 300 in the example shown in FIG. 2) is implemented. Each communication unit 200 shown in FIG. 2 has a logical communication unit 270. In the present description, "logical communication unit" includes hardware logic and/or software logic which provide the aforementioned logical communication processing.

For example, referring to an OSI reference model, the logical communication unit 270 has layers corresponding to a network layer, a transport layer, a session layer, a presentation layer, an application layer and the like. However, the logical communication unit 270 does not have a physical layer.

For example, a safety unit or the like which provides a safety function to a control target may be considered as the typical communication unit 200. The safety unit may have an arithmetic processing unit for cyclically executing safety logic in addition to the logical communication unit. However, "communication unit" in the present description is not limited to the safety unit and may be a unit which monitors a network to which the CPU unit 100 is connected, a unit which provides a database and various server functions, and the like, for example.

The CPU unit 100 is a kind of control device and has a communication port 150 for transmitting/receiving data. The communication port 150 of the CPU unit 100 is not limited to be in the CPU unit 100 and may be used by the communication unit 200 connected to the CPU unit 100. Accordingly, the logical communication unit 270 of the communication unit 200 is configured to transmit/receive data to/from the communication device 300 electrically connected to the communication port 150 of the CPU unit 100.

That is, the CPU unit 100 may relay (bridge) data received from the communication unit 200 to the communication port 150. In addition, the CPU unit 100 may relay (bridge) data received through the communication port 150 to the communication unit 200.

The CPU unit 100 has a forwarding processing unit which forwards transmission data transmitted from the communication unit 200 to a communication device 300 which is a transmission destination. According to this forwarding processing unit, data sent from the communication unit 200 is forwarded to the CPU unit 100 and sent from the communication port 150 of the CPU unit 100 to the communication device 300 which is a target.

The forwarding processing unit of the CPU unit 100 forwards reception data received from any communication device 300 to a communication unit 200 which is a transmission destination of the reception data. According to this forwarding processing unit, data sent from a certain communication device 300 is received by the communication port 150 of the CPU unit 100 and sent from the CPU unit 100 to the communication unit 200 which is a target.

Such relaying between each communication unit 200 and each communication device 300 is performed according to data exchange information 180 stored in the CPU unit 100.

As will be described later, the CPU unit 100 and each communication unit 200 are typically connected through a communication line (hereinafter referred to as an "internal bus"). The CPU unit 100 forwards data received from any communication device 300 through the communication port 150 to a communication unit 200 which is a transmission destination through the internal bus according to the data exchange information 180 and forwards data received from any communication unit 200 through the internal bus to a communication device 300 which is a transmission destination through the communication port 150.

When the configuration shown in FIG. 2 is employed, it is not necessary to implement the communication function in the communication unit 200 because the communication function implemented in the CPU unit 100 can be shared, and thus hardware costs of the communication unit 200 can be reduced and development costs and development time for the communication unit 200 can be decreased.

Meanwhile, as a communication protocol for transmitting/receiving data to/from the communication device 300 through the communication port 150 of the CPU unit 100, EtherNet/IP (registered trademark), EtherCAT (registered trademark), Functional Safety over EtherCAT (FSoE), CIP Safety (on EtherNet/IP or on DeviceNet), Profinet Safety and the like in addition to general TCP/IP may be used. Further, the communication protocol is not limited to these communication protocols and any communication protocol may be employed.

In the following description, main data transmitted/received between the communication unit 200 and the communication device 300 is described as a "communication frame." However, "control information" may be added to a "communication frame" between the CPU unit 100 and the communication unit 200 which perform forwarding processing and in the inside of the CPU unit 100, and thus data which is a combination of the control information and the communication frame may be a transmission/reception target.

Meanwhile, data transmitted/received is not limitedly interpreted based on the term "communication frame" and there may be cases in which the data is transmitted/received in units of "packet" and in units of a longer data string, for example.

### <B. Example of hardware configuration>

Next, an example of a hardware configuration of each unit constituting the control system 1 according to the present embodiment will be described.

### (b1: Connection configuration between units)

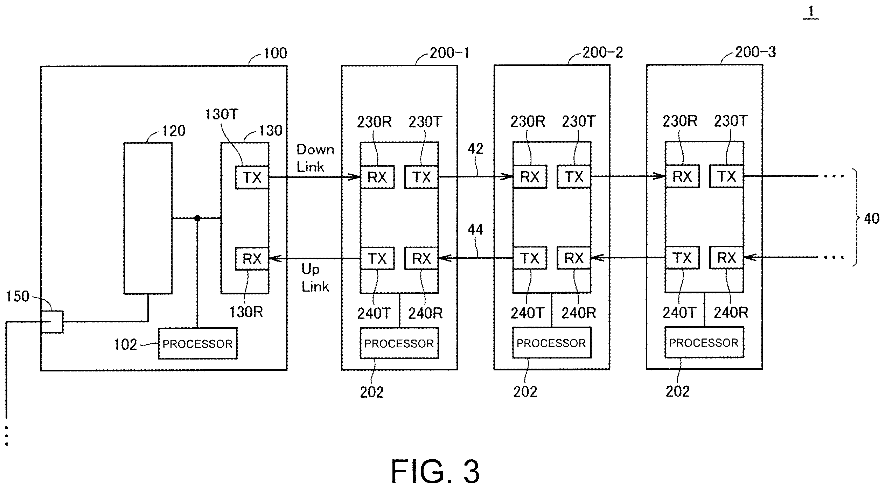

FIG. 3 is a schematic diagram showing a connection configuration between units of the control system 1 according to the present embodiment. Referring to FIG. 3, the CPU unit 100 is configured to be able to communicate with one or a plurality of the units 200 through internal buses 40 (a downlink 42 and an uplink 44) which are communication lines. In the connection configuration of the control system 1 shown in FIG. 3, the CPU unit 100 is connected to the one or the plurality of communication units 200 in a daisy chain manner.

As an example, serial communication is employed for the internal buses 40 (downlink 42 and uplink 44) and data which is a communication target is sequentially transmitted in the form of arrangement in a line and in time series. Data is sequentially transmitted from the CPU unit 100 to the communication unit 200 in one direction on the downlink 42. On the other hand, data is sequentially transmitted from any communication unit 200 to the CPU unit 100 in one direction on the uplink 44.

When each communication unit 200 receives a communication frame transmitted on the downlink 42 or the uplink 44, each communication unit 200 decodes data from the communication frame and performs a required process. In addition, each communication unit 200 retransmits (forwards) the received communication frame to the communication unit 200 of the next stage.

To realize such a communication frame retransmission (forwarding) process, each communication unit 200 includes a reception unit (hereinafter represented as "RX") 230R and a transmission unit (hereinafter represented as "TX") 230T with respect to the downlink 42 and includes a reception unit 240R and a transmission unit 240T with respect to the uplink 44. In addition, each communication unit 200 includes a processor 202.

The CPU unit 100 includes a network communication unit 120 and an internal bus communication unit 130. The network communication unit 120 performs a process of sending a communication frame from the communication port 150 and a process of receiving a communication frame through the communication port 150. The internal bus communication unit 130 performs a process of sending a communication frame and a process of receiving a communication frame through the internal buses 40. The processes in the network communication unit 120 and the internal bus communication unit 130 are controlled by a processor 102. That is, the processor 102 realizes a forwarding process by executing a system program 106.

### (b2: Example of configuration of CPU unit 100)

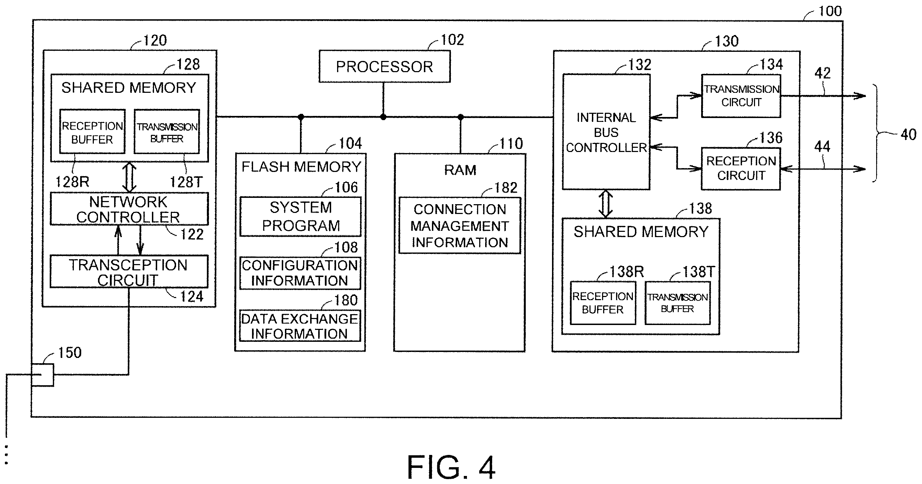

FIG. 4 is a schematic diagram showing an example of a hardware configuration of the CPU unit 100 included in the control system 1 according to the present embodiment. Referring to FIG. 4, the CPU unit 100 includes the processor 102, a flash memory 104, a random access memory (RAM) 110, the network communication unit 120 and the internal bus communication unit 130.

The processor 102 realizes a control process for the network communication unit 120 and the internal bus communication unit 130 by reading and executing the system program 106 stored in the flash memory 104. Processes performed by the processor 102 will be described in detail later.

The flash memory 104 stores configuration information 108 and the data exchange information 180 in addition to the system program 106.

The configuration information 108 includes set values and the like of the communication units 200 respectively connected to the CPU unit 100.

The data exchange information 180 includes route information and the like for controlling transmission and reception of communication frames between each communication unit 200 and the communication device 300 as will be described later.

Connection management information 182 in addition to working data which is not shown is disposed in the RAM 110. The connection management information 182 includes management information required for a process of transmitting a communication frame from the CPU unit 100 to the communication device 300 as will be described later. Typically, the connection management information 182 is appropriately generated or updated whenever connection with a transmission destination is established.

The network communication unit 120 includes a network controller 122, a transception (transmission/reception)circuit 124 and a shared memory 128.

The network controller 122 performs a forwarding process and the like on communication frames accumulated in the shared memory 128.

The transception circuit 124 modulates a data string provided from the network controller 122 into electric signals, sends the electric signals through a network cable connected to the communication port 150, demodulates the electric signals received through the network cable connected to the communication port 150 into a data string and outputs the data string to the network controller 122.

The shared memory 128 allows data access from the processor 102 and the internal bus communication unit 130 in addition to the network controller 122. The shared memory 128 has a reception buffer 128R and a transmission buffer 128T. Communication frames received through the communication port 150 are accumulated in the reception buffer 128R and communication frames scheduled to be sent through the communication port 150 are accumulated in the transmission buffer 128T.

The internal bus communication unit 130 includes an internal bus controller 132, a transmission circuit 134, a reception circuit 136 and a shared memory 138.

The internal bus controller 132 performs a forwarding process and the like on communication frames accumulated in the shared memory 138.

The transmission circuit 134 modules a data string provided from the internal bus controller 132 into electric signals and sends the electric signals through the internal bus 40 (downlink 42). The reception circuit 136 demodulates electric signals received through the internal bus 40 (uplink 44) into a data string and outputs the data string to the internal bus controller 132.

The shared memory 138 allows data access from the processor 102 and the network communication unit 120 in addition to the internal bus controller 132. The shared memory 138 has a reception buffer 138R and a transmission buffer 138T. Communication frames received through the internal bus 40 (uplink 44) are accumulated in the reception buffer 138R and communication frames scheduled to be sent through the internal bus 40 (downlink 42) are accumulated in the transmission buffer 138T.

### (b3: Example of configuration of communication unit 200)

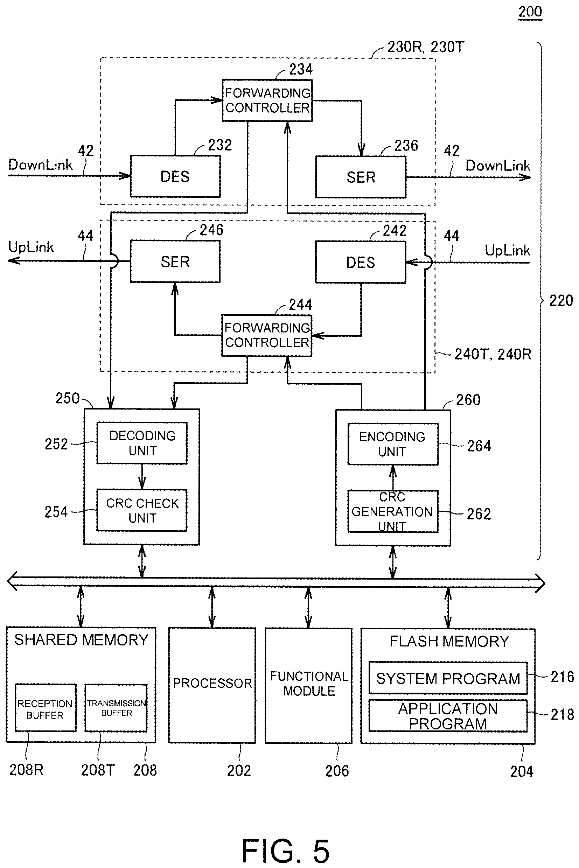

FIG. 5 is a schematic diagram showing an example of a hardware configuration of the communication unit 200 included in the control system 1 according to the present embodiment. Referring to FIG. 5, the communication unit 200 includes the processor 202, a flash memory 204, a functional module 206, a shared memory 208 and an internal bus communication unit 220.

The processor 202 realizes a control process for a control target by reading and executing a system program 216 and an application program 218 stored in the flash memory 204. A process of transmitting/receiving data to/from any communication device 300 may be defined in the application program 218.

That is, the logical communication unit 270 shown in FIG. 2 may be realized by the processor 202 of the communication unit 200 executing the system program 216 and/or the application program 218.

The functional module 206 is a hardware circuit for realizing a process performed by each communication unit 200 and may include a circuit for receiving an input signal from a field, a circuit for generating an output signal to the field, a circuit for performing serial communication with other controllers, and the like, for example. Meanwhile, the functional module 206 may be omitted when the processor 202 can realize a necessary process by executing the application program 218.

The shared memory 208 allows data access from the processor 202 and the like in addition to the internal bus communication unit 220. The shared memory 208 has a reception buffer 208R and a transmission buffer 208T. Communication frames received by the internal bus communication unit 220 are accumulated in the reception buffer 208R and communication frames scheduled to be sent by the internal bus communication unit 220 are accumulated in the transmission buffer 208T.

The internal bus communication unit 220 includes de-serializers (hereinafter referred to as "DES") 232 and 242, serializers (hereinafter referred to as "SER") 236 and 246, and forwarding controllers 234 and 244.

The DES 232, the forwarding controller 234 and the SER 236 correspond to the reception unit 230R and the transmission unit 230T with respect to the downlink 42 shown in FIG. 3. Similarly, the DES 242, the forwarding controller 244 and the SER 246 correspond to the reception unit 240R and the transmission unit 240T with respect to the uplink 44 shown in FIG. 4.

The internal bus communication unit 220 further includes a reception processing unit 250 and a transmission processing unit 260.

The reception processing unit 250 is connected to the forwarding controllers 234 and 244 and processes a communication frame received from the communication unit 200 of the previous stage. The reception processing unit 250 includes a decoding unit 252 and a CRC check unit 254. The decoding unit 252 decodes the communication frames received in the forwarding controllers 234 and 244 into data according to a predetermined algorithm. The CRC check unit 254 performs error check (e.g., cyclic redundancy check (CRC) code) based on a frame check sequence (FCS) added to the end of a communication frame. Data output from the reception processing unit 250 is accumulated in the reception buffer 208R.

The transmission processing unit 260 is connected to the forwarding controllers 234 and 244 and performs generation and timing control of a communication frame retransmitted (forwarded) to the communication unit 200 of the next stage, and the like according to an instruction from the processor 202 or the like. The transmission processing unit 260 includes a CRC generation unit 262 and an encoding unit 264. The CRC generation unit 262 adds an error control code (CRC) to data accumulated in the transmission buffer 208T. The encoding unit 264 encodes data from the CRC generation unit 262 and outputs the encoded data to the corresponding forwarding controller 234 or 244.

### <C. Communication processing between communication unit and communication device>

Next, configurations and processes with respect to communication processing between the communication unit 200 and the communication device 300 will be described.

### (c1: Connection configuration)

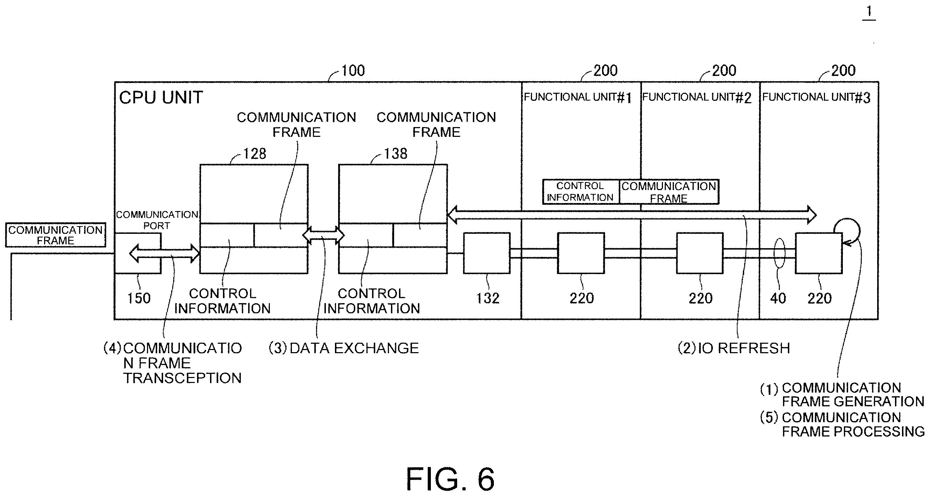

FIG. 6 is a schematic diagram showing an example of connection configuration between the CPU unit 100 and the communication unit 200 in the control system 1 according to the present embodiment. Referring to FIG. 6, the internal bus communication unit 220 of each communication unit 200 is connected to the common internal buses 40 connected to the internal bus controller 132 of the CPU unit 100.

Data is exchanged between the CPU unit 100 and each communication unit 200 in a predetermined update period. More specifically, OUT data (command value) transmitted from the CPU unit 100 to each communication unit 200 and IN data (measurement value, state value and the like) transmitted from each communication unit 200 to the CPU unit 100 are transmitted through the internal buses 40 in each predetermined update period, and thus data stored in the CPU unit 100 and each communication unit 200 is updated in each predetermined update period. Such data update in each predetermined period through the internal buses 40 is referred to as "IO refresh".

In the present description. "IO refresh" includes a process of performing data exchange between the CPU unit 100 and one or a plurality of communication units 200 in each predetermined period (hereinafter referred to as "IO refresh period").

In the CPU unit 100, data updated through IO refresh is stored in the shared memory 138 of the internal bus communication unit 130. The IO refresh period is hundreds of µs to several ms, in general, and may realize high-speed data update.

In the control system 1 according to the present embodiment, communication frames generated by the communication unit 200 and communication frames received from the communication device 300 are transmitted using IO refresh through the internal buses 40.

The internal bus communication unit 130 of the CPU unit 100 and the internal bus communication unit 220 of the communication unit 200 correspond to data communication units for performing data exchange in each IO refresh period.

Further, communication processing (communication frame transmission/reception process) between the CPU unit 100 and the communication device 300 is performed by the network communication unit 120 of the CPU unit 100. Communication frames transmitted/received to/from the communication device 300 are accumulated in the shared memory 128 of the network communication unit 120.

In the CPU unit 100, appropriate data exchange between communication frames accumulated in the shared memory 128 of the network communication unit 120 and communication frames accumulated in the shared memory 138 of the internal bus communication unit 130 is performed to realize communication processing between the one or a plurality of communication units 200 and the one or a plurality of communication devices 300. That is, the CPU unit 100 serves as a router which mediates communication processing between the communication unit 200 and the communication device 300 by mutually forwarding data transmitted/received through the internal buses 40 and data transmitted/received through the communication port 150 and network cables to each other.

As shown in FIG. 6, when any communication unit 200 generates a communication frame ((1) communication frame generation), the generated communication frame is transmitted from the communication unit 200 to the CPU unit 100 at an IO refresh timing ((2) IO refresh). Here, since data exchange according to IO refresh is used, corresponding control information is added to the generated communication frame.

In IO refresh, data is exchanged between the shared memory 138 of the internal bus communication unit 130 of the CPU unit 100 and the communication unit 200.

Subsequently, data is exchanged between the shared memory 138 of the internal bus communication unit 130 of the CPU unit 100 and the shared memory 128 of the network communication unit 120 ((3) data exchange). Data exchange between the shared memory 138 and the shared memory 128 is executed according to data exchange information 180 prepared in advance.

Typically, the data exchange information 180 may be set by a user using a support device or the like. The data exchange information 180 includes a memory address of a transmission source, a memory address of a transmission destination, a transmission size, and the like.

Thereafter, the network communication unit 120 of the CPU unit 100 transmits communication frames accumulated in the shared memory 128 to the communication device 300 or accumulates communication frames received from the communication device 300 in the shared memory 128 ((4) communication frame transmission/reception). Further, when control information has been added to communication frames accumulated in the shared memory 128, communication frames from which the control information has been excluded are transmitted according to a communication protocol defined in the added control information.

A communication frame received by the CPU unit 100 from the communication device 300 is forwarded to a communication unit 200 of a target through a procedure reverses for the communication frame. In addition, the communication unit 200 processes the received communication frame ((5) communication frame processing).

As shown in FIG. 6, in the control system 1 according to the present embodiment, the CPU unit 100 has a storage region (shared memory 138) in which an IO refresh result with respect to the communication unit 200 is stored and a storage region (shared memory 128) for communication processing through the communication port 150. That is, the CPU unit 100 has a first storage region (shared memory 138) in which data exchanged with the one or more communication units 200 is stored and a second storage region (shared memory 128) in which data transmitted/received to/from the communication device 300 through the communication port 150 is stored.

The CPU unit 100 performs data exchange between the first storage region (shared memory 138) and the second storage region (shared memory 128) according to the predetermined data exchange information 180. Communication frames are relayed between such storage regions to realize communication processing between the communication unit 200 and the communication device 300.

### (c2: memory layout and data exchange information)

Next, memory layouts in the shared memory 128 of the network communication unit 120 and the shared memory 138 of the internal bus communication unit 130 in the CPU unit 100 and the data exchange information 180 for exchanging data between the shared memories will be described.

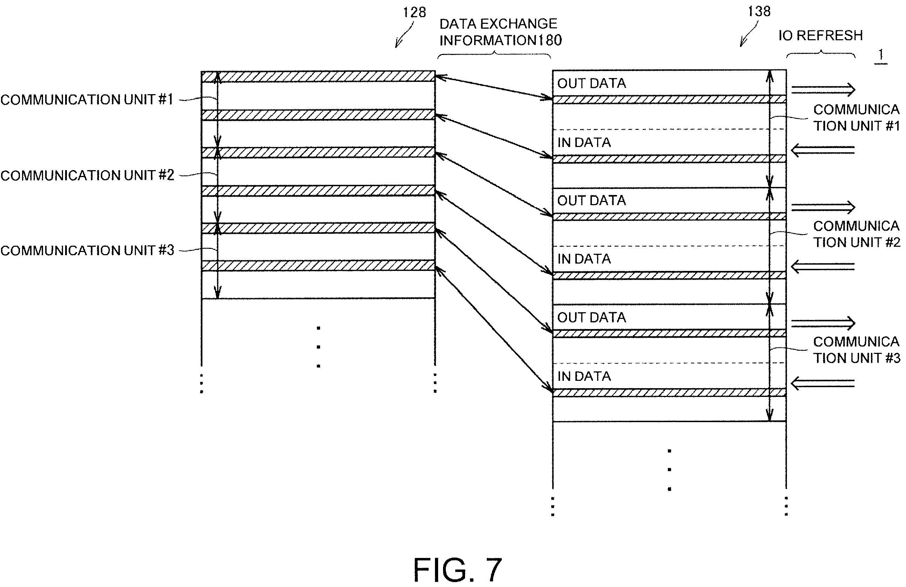

FIG. 7 is a schematic diagram showing an example of memory layouts in the shared memories of the CPU unit 100 according to the present embodiment. Referring to FIG. 7, a data storage region is defined to correspond to IO refresh with respect to each communication unit 200 in the shared memory 138 of the internal bus communication unit 130. In the example shown in FIG. 7, regions are respectively allocated to the communication units 200-1, 200-2, 200-3, ... in the shared memory 138, and IN data and OUT data exchanged with a corresponding communication unit 200 are stored in each region.

A part of the IN data includes a communication frame transmitted from the communication unit 200 and the OUT data includes a communication frame forwarded to the communication unit 200.

Further, regions are respectively allocated to the communication units 200-1, 200-2, 200-3, ... in the shared memory 128 of the network communication unit 120. Only communication frames transmitted/received to/from the communication device 300 are stored in the shared memory 128.

To match the layout of the shared memory 138 with the layout of the shared memory 128, the data exchange information 180 is referred to. That is, the data exchange information 180 defines whether a communication frame present in the shared memory 138 corresponds to a communication frame present at any position in the shared memory 128 and defines whether a communication frame present in the shared memory 128 corresponds to a communication frame present at any position in the shared memory 138.

In this manner, data exchange performed in the CPU unit 100 includes a process of writing a communication frame present in the shared memory 138 and transmitted from the communication unit 200 at an appropriate position in the shared memory 128 with reference to the data exchange information 180 and a process of writing a communication frame present in the shared memory 128 and directed to the communication unit 200 at an appropriate position in the shared memory 138.

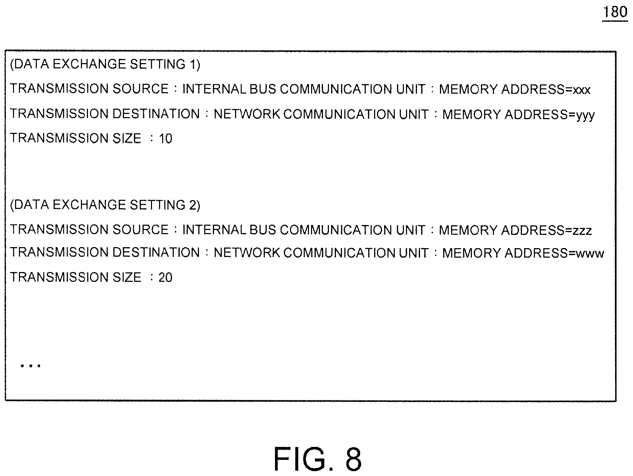

FIG. 8 is a schematic diagram showing an example of the contents of the data exchange information 180 stored in the CPU unit 100 according to the present embodiment. Referring to FIG. 8, the data exchange information 180 includes one or more data exchange settings. Each data exchange setting includes a memory address of a transmission source, a memory address of a transmission destination, a transmission size, and the like.

One of the internal bus communication unit 130 and the network communication unit 120 is the transmission source and the other is the transmission destination. In addition, a memory address in the shared memory 128 or the shared memory 138 is defined as a memory address. The transmission size represents the size of a communication frame which is an exchange target, or the like.

For example, when a communication frame is transmitted from the communication unit 200 to any communication device 300, the data exchange information 180 includes (1) a path (copy source) of a storage region in the communication unit 200 which is the target, (2) a path (copy destination) of a storage region in the shared memory 138 of the internal bus communication unit 130 and (3) data sizes of the communication frame and control information addressed to the communication device 300.

On the contrary, when a communication frame is transmitted from any communication device 300 to the communication unit 200, the data exchange information 180 includes (1) a path (copy source) of a storage region in the shared memory 138 of the internal bus communication unit 130, (2) a path (copy destination) of a storage region in the communication unit 200 which is the target and (3) data sizes of the communication frame and control information addressed to the communication unit 200.

Meanwhile, a path of a storage region is allocated from the beginning in the order set for transmission and reception to control data arrangement so as not to exceed the size of the storage region.

### (c3: communication frame transmission process)

Next, a process when a communication frame is transmitted from the communication unit 200 will be described.

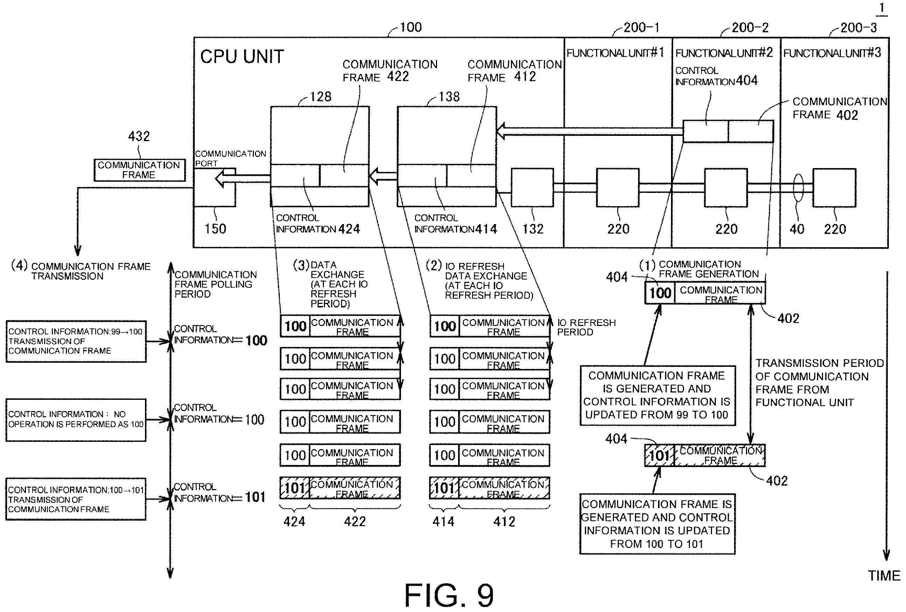

FIG. 9 is a schematic diagram for describing a communication frame transmission process in the control system 1 according to the present embodiment. FIG. 9 shows a process of transmitting a communication frame generated by any communication unit 200 connected to the CPU unit 100 through a bus to the communication device 300 connected to the CPU unit 100 through a network.

In the control system 1 according to the present embodiment, a communication frame is transmitted using IO refresh which is high-speed and cyclic data transmission in order to guarantee responsiveness of the communication frame. However, when IO refresh is used, data exchange is performed in each IO refresh update period irrespective of whether a communication frame to be transmitted is newly added, and thus control information updated each time is added to a communication frame in order to detect generation of a new communication frame.

When the CPU unit 100 is requested to transmit communication frames using IO refresh in this manner, changes of communication frames need to be managed and control information is used to detect such changes of communication frames.

More specifically, when the communication unit 200 generates and transmits a communication frame, the contents of control information added to the communication frame is updated. The CPU unit 100 monitors the contents of control information added to each communication frame accumulated in the shared memory 128 for each predetermined period (hereinafter referred to as a "communication frame polling period"). When the CPU unit 100 detects the update of the contents of control information added to any communication frame, the CPU unit 100 starts a process of transmitting the communication frame to which the control information whose update has been detected has been added.

That is, the CPU unit 100 checks control information added to a communication frame data-exchanged with the communication unit 200 according to IO refresh for each communication frame polling period and transmits the communication frame by using a change in the control information as a trigger. By using such control information, communication frame transmission can be realized using IO refresh which is cyclic data exchange.

Although the communication frame polling period is basically set to a time longer than the IO refresh period, it may have the same duration as the IO refresh period or may be set to a time shorter than the IO refresh period.

Meanwhile, when a safety unit is used as the communication unit 200, the communication frame polling period may be set to the duration of a safety task period. That is, data transmission and reception may be performed in a safety task monitoring period.

FIG. 9 shows a specific example of the communication frame transmission process. Referring to FIG. 9, (1) in communication frame generation, the communication unit 200 generates a communication frame 402 in each predetermined transmission period.

When the communication frame 402 (transmission data) to be newly transmitted is generated, control information 404 having different contents from control information 404 added to a previously generated communication frame 402 (transmission data) is added to the communication frame 402 to be newly transmitted and data exchange with the CPU unit 100 is performed. As an example, the control information 404 added to the communication frame 402 includes a value which increments (or decrements) when communication frame 402 to be newly transmitted is generated. That is, when the communication frame 402 (transmission data) to be newly transmitted is generated, new control information 404 is generated by incrementing or decrementing the value of the control information 404 added to the previously generated communication frame 402 (transmission data).

In the example shown in FIG. 9, "100" is set in the control information 404 added to the preceding communication frame 402 and, when the subsequent communication frame 402 is generated, "101" incremented from "100" by 1 is stored in the control information 404 added to the newly generated communication frame 402.

In this manner, the communication unit 200 generates the communication frame 402 in each predetermined transmission period and updates the value of the control information 404 added to the generated communication frame 402 according to a predetermined rule.

The communication frame 402 generated by the communication unit 200 and the control information 404 added to the communication frame 402 are targets of IO refresh and are transmitted to the shared memory 138 of the internal bus communication unit 130 in each IO refresh period. A communication frame 412 from the communication unit 200 and control information 414 added to the communication frame 412, which are stored in the shared memory 138, are updated in each IO refresh period ((2) IO refresh).

In the CPU unit 100, data is exchanged between the shared memory 138 of the internal bus communication unit 130 and the shared memory 128 of the network communication unit 120 ((3) data exchange). As a result of data exchange, the same communication frame 422 and the same control information 424 as those generated by the communication unit 200 are stored in the shared memory 128. Since data exchange between the shared memory 138 and the shared memory 128 is cyclically performed in a period equal to or shorter than the IO refresh period, update of the communication frame 412 and the control information 414 added to the communication frame 412 in the shared memory 128 and update of the communication frame 422 and the control information 424 added to the communication frame 422 in the shared memory 138 are performed almost simultaneously.

The network communication unit 120 monitors the value of the control information 424 in the shared memory 138 for each communication frame polling period. When a change in the value of the control information 424 is detected, the network communication unit 120 transmits a communication frame 432 corresponding to the communication frame 422 to which the control information 424 having the changed value has been added ((4) communication frame transmission and reception).

In the example shown in FIG. 9, change of the control information 404 from "99" to "100" is detected and the communication frame 432 is transmitted upon arrival of the first communication frame polling period. Subsequently, since the control information 404 remains as "100" upon arrival of the second communication frame polling period, the communication frame 432 is not transmitted.

At the subsequent third communication frame polling period, change of the control information 404 from "100" to "101" is detected, and thus the communication frame 432 is transmitted.

In this manner, the network communication unit 120 of the CPU unit 100 monitors whether a communication frame 432 to be transmitted has arrived for each predetermined transmission period (communication frame polling period) and starts transmission of the communication frame 432 when it is determined that the communication frame 432 has arrived.

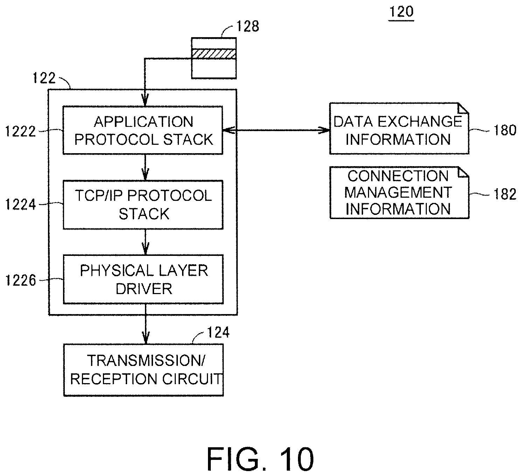

FIG. 10 is a schematic diagram for describing the process of transmitting a communication frame in the CPU unit 100 of the control system 1 according to the present embodiment. Referring to FIG. 10, the network controller 122 of the network communication unit 120 includes an application protocol stack 1222, a TCP/IP protocol stack 1224 and a physical layer driver 1226 as logical components.

When a communication frame stored in the shared memory 128 is transmitted, the application protocol stack 1222 searches for settings of the data exchange information 180 corresponding to the target communication frame and the connection management information 182.

For example, the connection management information 182 includes a connection ID, a transmission destination IP address, a used UDP port, a communication frame sequence count and the like. The application protocol stack 1222 establishes a connection with a transmission destination prior to transmission of a communication frame.

The TCP/IP protocol stack 1224 generates an Ethernet (registered trademark) frame on the basis of a communication frame which is a transmission target and the connection management information 182. The physical layer driver 1226 gives a command to the transmission/reception circuit 124 such that the Ethernet frame from the TCP/IP protocol stack 1224 can be output as an electric signal.

A communication frame generated by the communication unit 200 is transmitted to the communication device 300 through the CPU unit 100 according to the above-described procedure.

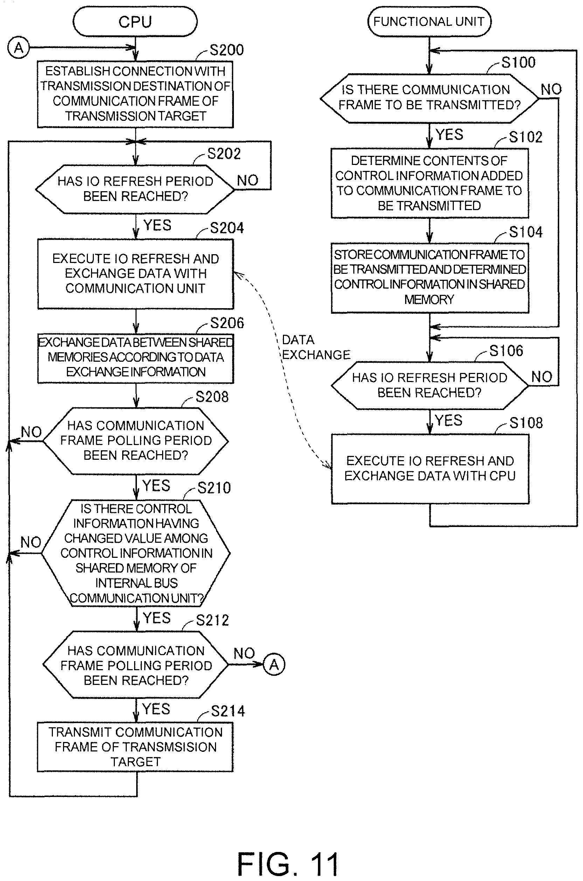

FIG. 11 is a flowchart showing a processing procedure of the communication frame transmission process in the control system 1 according to the present embodiment. FIG. 11 shows a processing procedure in the CPU unit 100 and a processing procedure in the communication unit 200. Each step shown in FIG. 11 may be realized by executing programs through the processor 102 of the CPU unit 100 and the processor 202 of the communication unit 200.

Referring to FIG. 11, the communication unit 200 determines whether there is a communication frame to be transmitted (step S100). If there is no communication frame to be transmitted (NO in step S100), processes of steps S102 and S104 are skipped.

If there is a communication frame to be transmitted (YES in step S100), the communication unit 200 determines the contents of control information added to the communication frame to be transmitted (step S102) and stores the communication frame to be transmitted and the determined control information in the transmission buffer 128T of the shared memory 128 (step S104).

Subsequently, the communication unit 200 determines whether an IO refresh period has arrived (step S106). If an IO refresh period has not been reached (NO in step S106), the communication unit 200 waits for arrival of an IO refresh period.

If the IO refresh period has arrived (YES in step S106), the communication unit 200 executes IO refresh and perform data exchange with the CPU unit 100 (step S108). Then, the process of step S100 and subsequent steps are repeated.

Meanwhile, first, the CPU unit 100 establishes a connection with a transmission destination of a communication frame which is a transmission target according to predetermined settings (step S200). When the connection is established, the connection management information 182 for managing the established connection is generated or updated. Subsequently, the CPU unit 100 determines whether the IO refresh period has arrived (step S202). If an IO refresh period has not arrived (NO in step S202), the CPU unit 100 waits for arrival of an IO refresh period.

If the IO refresh period has arrived (YES in step S202), the CPU unit 100 executes IO refresh and performs data exchange with the communication unit 200 (step S204). Data acquired through data exchange is stored in the shared memory 138 of the internal bus communication unit 130. Subsequently, the CPU unit 100 performs data exchange between the shared memory 138 of the internal bus communication unit 130 and the shared memory 128 of the network communication unit 120 according to the data exchange information 180 (step S206).

The CPU unit 100 determines whether a communication frame polling period has arrived (step S208). If the communication frame polling period has not arrived (NO in step S208), the process of step S202 and subsequent steps are repeated.

If the communication frame polling period has arrived (YES in step S208), the CPU unit 100 determines whether there is control information having a changed value among control information in the shared memory 138 of the internal bus communication unit 130 (step S210). If there is no control information having a changed value among the control information in the shared memory 138 of the internal bus communication unit 130 (NO in step S210), the process of step S202 and subsequent steps are repeated.

If there is control information having a changed value among the control information in the shared memory 138 of the internal bus communication unit 130 (YES in step S210), the CPU unit 100 determines whether connection with a transmission destination has been established with respect to a communication frame which is a transmission target corresponding to the control information having a changed value (step S212). If a connection with the transmission destination has not been established (NO in step S212), the process of step S200 and subsequent steps are repeated.

If the connection with the transmission destination has been established (YES in step S212), the CPU unit 100 transmits the communication frame which is a transmission target (step S214). Then, the process of step S202 and subsequent steps are repeated.

### (c4: communication frame reception process)

Next, a process when the communication unit 200 receives a communication frame will be described.

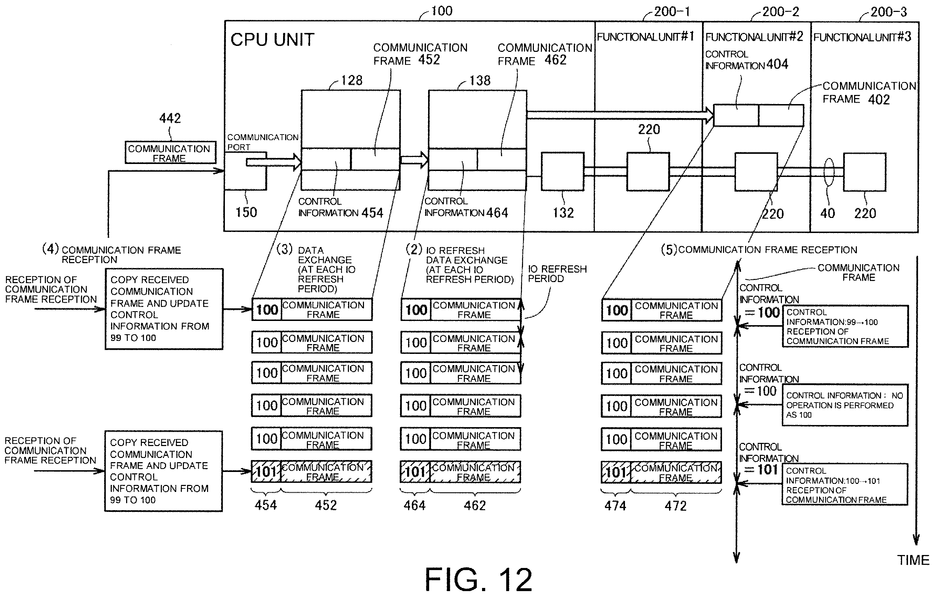

FIG. 12 is a schematic diagram for describing a communication frame reception process in the control system 1 according to the present embodiment. FIG. 12 shows a process of forwarding a communication frame received from any communication device 300 connected to the CPU unit 100 through a network to the communication unit 200 connected to the CPU unit 100 through a bus.

As described above, a communication frame is transmitted using IO refresh which is high-speed cyclic data transmission in order to guarantee responsiveness of the communication frame in the control system 1 according to the present embodiment. However, when IO refresh is used, data exchange is performed in each IO refresh update period irrespective of whether a communication frame to be transmitted is newly added, and thus control information updated each time is added to a communication frame in order to detect the generation of a new communication frame.

More specifically, when the CPU unit 100 receives a communication frame from any communication device 300, the CPU unit 100 updates the contents of control information added to the communication frame when the received communication frame is forwarded to the communication unit 200 which is a target. The communication unit 200 monitors the contents of control information added to each communication frame IO refreshed between the communication unit 200 and the shared memory 138 for each predetermined period (communication frame polling period). When the communication unit 200 detects the update of the monitored contents of control information, the communication unit 200 starts a process of receiving the communication frame to which the control information whose update has been detected has been added.

That is, the communication unit 200 checks control information added to a communication frame data-exchanged with the CPU unit 100 according to IO refresh for each communication frame polling period and receives the communication frame by using a change in the control information as a trigger. By using such control information, reception of a communication frame can be realized using IO refresh which is cyclic data exchange.

Although the communication frame polling period is basically set to a time longer than an IO refresh period, it may be the same duration as the IO refresh period and may be set to a time shorter than the IO refresh period. Further, the IO refresh period set in the CPU unit 100 in the transmission process may be identical to or different from the IO refresh period set in the communication unit 200 in the reception process.

FIG. 12 shows a specific example of the communication frame reception process. Referring to FIG. 12, in (4) communication frame reception, when the CPU unit 100 receives a communication frame 442 from the communication device 300, the CPU unit 100 writes the received communication frame 442 to the shared memory 128. In this process of writing to the shared memory 128, the value of control information 454 added to the communication frame 452 is updated. In the example of FIG. 12, "100" changed from "99" set in previous control information 454 is stored in control information 454 added to a previous communication frame 452. Further, when the subsequent communication frame 442 is received, "101" incremented from "100" by 1 is stored in control information 454 added when the newly generated communication frame 442 is written to the shared memory 128.

In this manner, whenever the CPU unit 100 receives a communication frame 442 from the communication device 300, the CPU unit 100 stores a communication frame 452 which is a copy of the received communication frame 442 in the shared memory 128 and updates the value of control information 454 added to the communication frame 452 according to a predetermined rule.

In the CPU unit 100, data is exchanged between the shared memory 128 of the network communication unit 120 and the shared memory 138 of the internal bus communication unit 130 ((3) data exchange). As a result of data exchange, the same communication frame 462 and control information 464 as those stored in the shared memory 128 are stored in the shared memory 138.

Since data exchange between the shared memory 128 and the shared memory 138 is cyclically performed in a period identical to or shorter than the IO refresh period, update of the communication frame 452 and the control information 454 added to the communication frame 452 in the shared memory 128 and update of the communication frame 462 and the control information 464 added to the communication frame 462 in the shared memory 138 are performed almost simultaneously.

Further, the communication frame 462 and the control information 464 stored in the shared memory 138 are targets of IO refresh and they are transmitted to the communication unit 200 in each IO refresh period ((2) IO refresh). That is, data exchange is cyclically performed between the shared memory 128 of the CPU unit 100 and the shared memory 208 of the communication unit 200.

In this manner, when the CPU unit 100 receives a communication frame (reception data) from any communication device 300, the CPU unit 100 adds control information having different contents from control information added to the previously received communication frame (reception data) and performs data exchange with the communication unit 200 which is a transmission destination of the reception data.

The communication unit 200 monitors the value of control information 474 in the shared memory 208 acquired by IO refresh for each communication frame polling period. When a change in the value of the control information 474 is detected, the communication unit 200 processes a communication frame 472 to which the control information 474 having the changed value has been added ((5) communication frame reception).

In the example of FIG. 12, when the first communication frame polling period has arrived, a change of the control information 474 from "99" to "100" is detected and the target communication frame 472 is processed. Subsequently, when the second communication frame polling period has arrived, since the control information 474 remains as "100," the communication frame 472 is not processed.

Subsequently, when the third communication frame polling period has arrived, since a change of the control information 474 from "100" to "101" is detected, the communication frame 472 is processed.

In this manner, the communication unit 200 monitors whether the communication frame 472 to be processed has arrived for each predetermined reception period (communication frame polling period) and starts processing of the communication frame 472 when it is determined that the communication frame 472 has arrived.

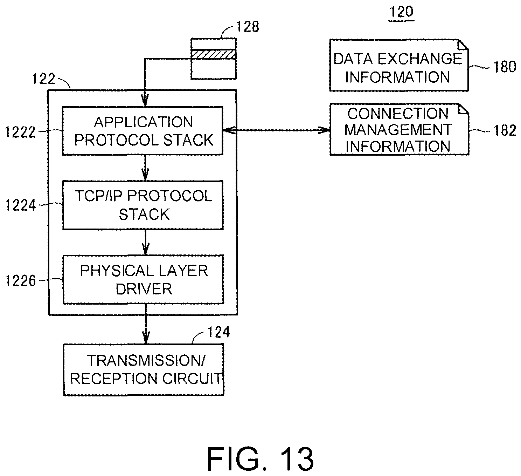

FIG. 13 is a schematic diagram for describing a communication frame reception process in the CPU unit 100 of the control system 1 according to the present embodiment. Referring to FIG. 13, the physical layer driver 1226 decodes a data string from an electric signal from the transmission/reception circuit 124 and outputs the data string to the TCP/IP protocol stack 1224. The TCP/IP protocol stack 1224 reconstitutes an Ethernet frame from the data string from the physical layer driver 1226.

The application protocol stack 1222 searches for an entry corresponding to a connection ID in the Ethernet frame from the TCP/IP protocol stack 1224 with reference to the connection management information 182. Entries are added to the connection management information 182 when a connection is established. Each entry includes information representing correlation with the data exchange information 180. The application protocol stack 1222 stores a received communication frame at a corresponding position of the shared memory 128 on the basis of the retrieved information of the data exchange information 180.

A communication frame from the communication device 300, received by the CPU unit 100, is transmitted to the communication unit 200 according to the above-described procedure.

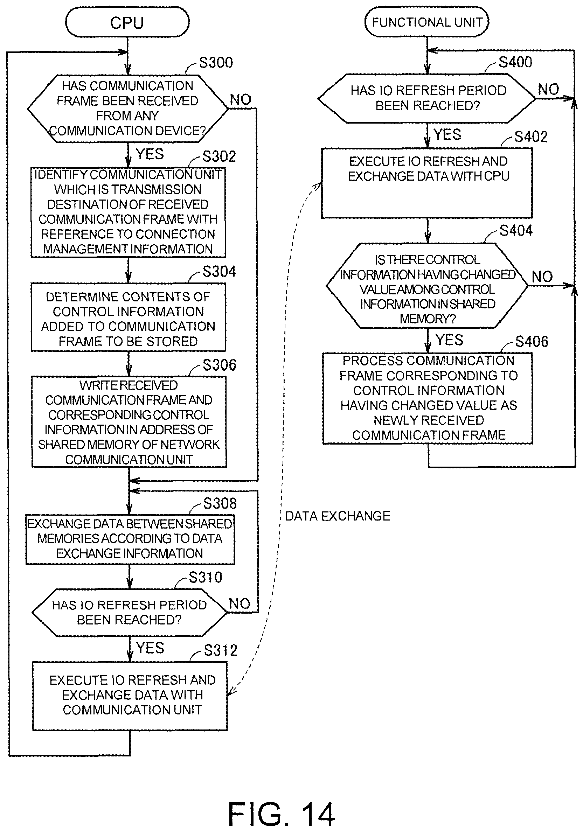

FIG. 14 is a flowchart showing a processing procedure of the communication frame reception process in the control system 1 according to the present embodiment. Referring to FIG. 14, the CPU unit 100 determines whether a communication frame has been received from any communication device 300 (step S300). If no communication frame has been received from any communication device 300 (NO in step S300), processes of steps S302 to S306 are skipped.

If a communication frame has been received from any communication device 300 (YES in step S300), the CPU unit 100 identifies the communication unit 200 which is a transmission destination of the received communication frame with reference to the connection management information 182 (step S302). The CPU unit 100 determines the contents of control information added to the communication frame to be stored (step S304). Then, the CPU unit 100 writes the received communication frame and the corresponding control information to an address of the shared memory 128 of the network communication unit 120, which corresponds to the identified communication unit 200 (step S306).

Subsequently, the CPU unit 100 performs data exchange between the shared memory 128 of the network communication unit 120 and the shared memory 138 of the internal bus communication unit 130 according to the data exchange information 180 (step S308).

Then, the CPU unit 100 determines whether an IO refresh period has arrived (step S310). If an IO refresh period has not arrived (NO in step S310), the CPU unit 100 waits for arrival of an IO refresh period.

If an IO refresh period has arrived (YES in step S310), the CPU unit 100 performs IO refresh and performs data exchange with the communication unit 200 (step S312). Then, the process of step S300 and subsequent steps are repeated.

On the other hand, the communication unit 200 determines whether an IO refresh period has arrived first (step S400). If an IO refresh period has not arrived (NO in step S400), the communication unit 200 waits for arrival of an IO refresh period.

If an IO refresh period has arrived (YES in step S400), the communication unit 200 performs IO refresh and performs data exchange with the CPU unit 100 (step S402).

Subsequently, the communication unit 200 determines whether there is control information having a changed value among control information in the shared memory 208 of the communication unit 200 (step S404). If there is no control information having a changed value among the control information in the shared memory 208 of the communication unit 200 (NO in step S404), the processes following step S400 are repeated.

If there is control information having a changed value among the control information in the shared memory 208 of the communication unit 200 (YES in step S404), the communication unit 200 processes a communication frame corresponding to the control information having a changed value as a newly received communication frame (step S406). Then, the process of S400 and subsequent steps are repeated.

### <D. Modified examples>

Although a configuration in which one communication port of the CPU unit 100 is used by one or more communication units 200 has been exemplified in the above embodiment, the forwarding function or the relay function (bridge function) of the CPU unit 100 according to the present embodiment is applicable to other configurations as described below.

### (d1: use of multiple communication ports)

As a first modified example, a configuration example in which a plurality of communication ports is used by one or a plurality of communication units 200 will be described.

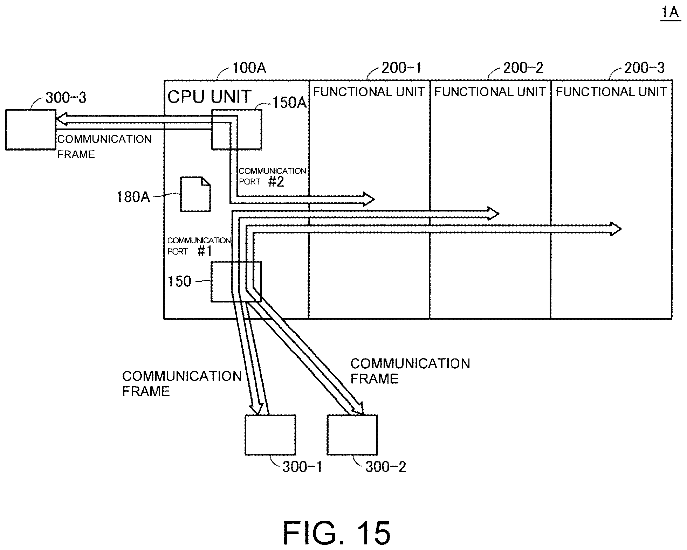

FIG. 15 is a schematic diagram showing an example of a configuration of a control system 1A according to the first modified example of the present embodiment. Referring to FIG. 15, the control system 1A includes a CPU unit 100A and one or more communication units 200.

The CPU unit 100A has two communication ports 150 and 150A for transmitting and receiving communication frames. That is, the CPU unit 100A has the communication port 150A different from the communication port 150 for transmitting and receiving data.

A communication protocol supported by the communication port 150 may be identical to or different from a communication protocol supported by the communication port 150A. Typically, a communication protocol for transmitting and receiving data through the communication port 150 differs from a communication protocol for transmitting and receiving data through the communication port 150A.

In the configuration example shown in FIG. 15, communication devices 300-1 and 300-2 are connected to the communication port 150 and a communication device 300-3 is connected to the communication port 150A. The communication unit 200 connected to the CPU unit 100A is able to use any of the communication port 150 and the communication port 150A of the CPU unit 100A.

The CPU unit 100A relays a communication frame between one of the communication devices 300 connected to the communication port 150 and the communication device 300 connected to the communication port 150A and the communication unit 200. According to such selective relaying of a communication frame, each communication unit 200 can use both the communication port 150 and the communication port 150A.

Such relaying between each communication unit 200 and the communication device 300 connected to the communication port 150 or the communication port 150A is performed according to data exchange information 180A stored in the CPU unit 100A.

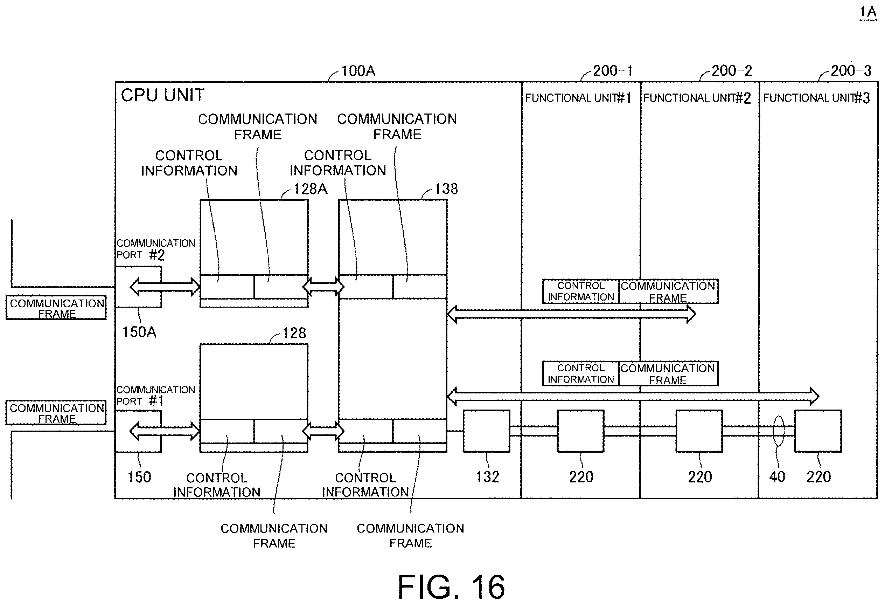

FIG. 16 is a schematic diagram showing an example of connection configuration between the CPU unit 100A and the communication unit 200 in the control system 1A according to the first modified example of the present embodiment. Referring to FIG. 16, the CPU unit 100A of the control system 1A has a shared memory 128A associated with the communication port 150A in addition to the shared memory 128 associated with the communication port 150.

The internal bus communication unit 130 performs data exchange of a communication frame to be stored in the shared memory 138, which is transmitted/received to/from the communication unit 200 through the internal bus 40, with the shared memory 128 or the shared memory 128A according to the predetermined data exchange information 180A.

In this manner, the CPU unit 100A has a second storage region (shared memory 128) in which data transmitted/received to/from the communication device 300 through the communication port 150 is stored and a third storage region (shared memory 128A) in which data transmitted/received to/from the communication device 300 through the communication port 150A is stored. In addition, the CPU unit 100A selectively exchanges data of the first storage region (shared memory 138) with the second storage region (shared memory 128) and the third storage region (shared memory 128A) according to the predetermined data exchange information 180A.

The process relating to data exchange between the shared memory 138 and the shared memory 128 or the shared memory 128A is the same as data exchange in the above-described embodiment and thus detailed description thereof is not repeated.

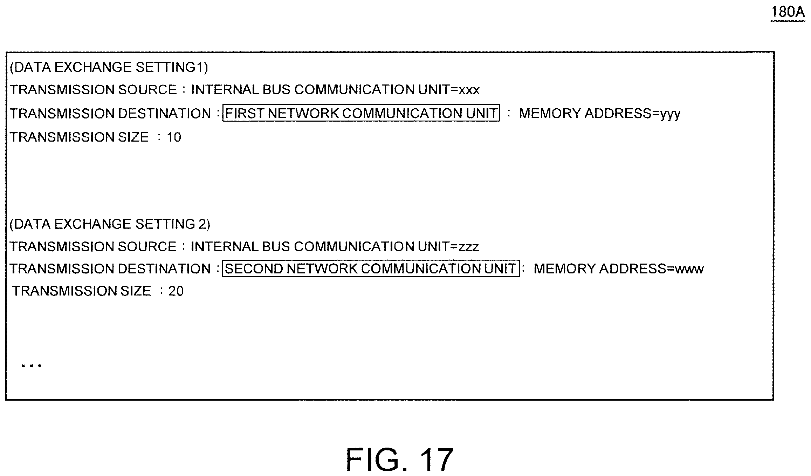

FIG. 17 is a schematic diagram showing an example of the contents of the data exchange information 180A stored in the CPU unit 100A according to the first modified example of the present embodiment. Referring to FIG. 17, the data exchange information 180A includes one or more data exchange settings. Each data exchange setting includes a memory address of a transmission source, a memory address of a transmission destination, a transmission size, and the like.

In the data exchange information 180A shown in FIG. 17, a network communication unit corresponding to each communication port can be designated as a transmission source or a transmission destination in each data exchange setting. Communication frame transmission and reception processes in the control system 1A according to the first modified example of the present embodiment can be realized according to selective designation of a network communication unit as described above.

The basic configuration and process of the control system 1A according to the first modified example of the present embodiment are the same as those of the control system 1 according to the present embodiment, and thus detailed description thereof is not repeated.

According to the first modified example of the present embodiment, a path through which a communication frame is relayed in the CPU unit 100A may be arbitrarily set by a user using a support device and the like. In this manner, it is possible to use a plurality of communication protocols installed in the CPU unit 100A without mounting a special communication protocol and the like in the communication unit 200 simply by setting the data exchange information 180A.

In addition, a utilization pattern in which one of two types of communication frame transmitted from the same communication unit 200 is transmitted from the communication port 150 of the CPU unit 100A and the other is transmitted from the communication port 150A of the CPU unit 100A is also possible.

As described above, the CPU unit 100A according to the first modified example of the present embodiment is able to relay a plurality of communication frames transmitted according to different communication protocols and relay communication frames to different communication ports. By using this configuration, a simple control configuration can also be realized in a control system using a plurality of communication protocols.

### (d2: Relaying between communication ports)

As a second modified example, an example of a configuration in which the CPU unit 100 having a plurality of communication ports serves as a router will be described.

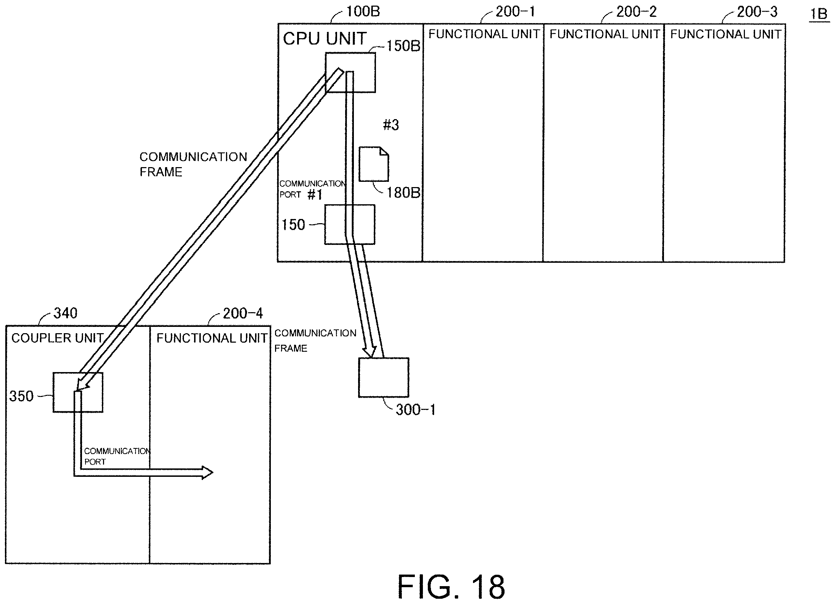

FIG. 18 is a schematic diagram showing an example of a configuration of a control system 1B according to the second modified example of the present embodiment. Referring to FIG. 18, the control system 1B includes a CPU unit 100B and one or more communication units 200. The control system 1B further includes a coupler unit 340 and the communication unit 200.

The CPU unit 100B has two communication ports 150 and 150B for transmitting and receiving communication frames. A communication protocol supported by the communication port 150 may be identical to or different from a communication protocol supported by the communication port 150B.

In an example of a configuration shown in FIG. 18, a communication device 300-1 is connected to the communication port 150 and the coupler unit 340 is connected to the communication port 150B. A communication unit 200-4 is connected to the coupler unit 340 through an internal bus which is not shown.

The CPU unit 100B relays communication frames between the communication device 300-1 connected to the communication port 150 and the coupler unit 340 and the communication unit 200-4 connected to the communication port 150B. Transmission of communication frames between devices having different communication protocols, and the like can be performed according to relaying of communication frames between communication ports in the CPU unit 100B.

Such relaying between the communication device 300 connected to the communication port 150 and the coupler unit 340 connected to the communication port 150B (and the communication unit 200 connected to the coupler unit 340) is performed according to data exchange information 180B stored in the CPU unit 100B.

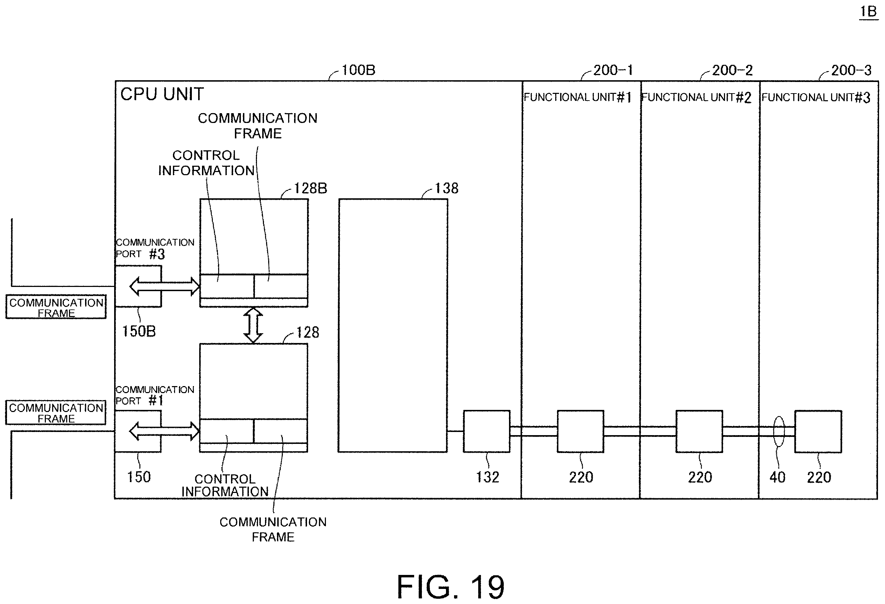

FIG. 19 is a schematic diagram showing an example of a connection configuration in the CPU unit 100B in the control system 1B according to the second modified example of the present embodiment. Referring to FIG. 19, the CPU unit 100B of the control system 1B has a shared memory 128B associated with the communication port 150B in addition to the shared memory 128 associated with the communication port 150.

In the CPU unit 100B, data exchange is performed between the shared memory 128 associated with the communication port 150 and the shared memory 128B associated with the communication port 150B according to the predetermined data exchange information 180B.

In this manner, the CPU unit 100B has a second storage region (shared memory 128) in which data transmitted/received to/from the communication device 300 through the communication port 150 is stored and a third storage region (shared memory 128B) in which data transmitted/received to/from the communication device 300 through the communication port 150B is stored. In addition, the CPU unit 100B performs data exchange between the second storage region (shared memory 128) and the third storage region (shared memory 128B) according to the predetermined data exchange information 180B.

The basic configuration and process of the control system 1B according to the second modified example of the present embodiment are the same as those of the control system 1 according to the present invention, and thus detailed description thereof is not repeated.

According to the second modified example of the present embodiment, a path through which a communication frame is relayed in the CPU unit 100B may be arbitrarily set by a user using a support device and the like. In this manner, it is possible to transmit data between a plurality of communication protocols connected to the CPU unit 100B without installing a special communication protocol and the like in the communication unit 200 simply by setting the data exchange information 180.

In this manner, a path through which a communication frame is relayed can be freely determined in the CPU unit 100B according to the second modified example of the present embodiment, and thus communication frames from a communication device 300 connected to a different network as well as the communication unit 200 connected to the CPU unit 100 can also be relayed to other networks. That is, communication frames can be relayed between networks of a plurality of layers by means of the CPU unit 100B according to the second modified example of the present embodiment.

### (d3: Use of multiple units)

As a third modified example, an example of a configuration in which a single communication unit uses communication ports disposed in a plurality of units will be described.

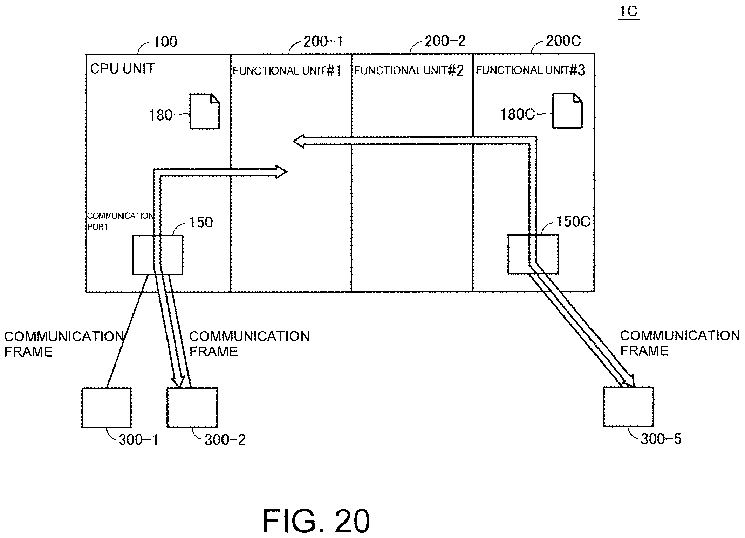

FIG. 20 is a schematic diagram showing an example of a configuration of a control system 1C according to the third modified example of the present embodiment. Referring to FIG. 20, the control system 1C includes the CPU unit 100, communication units 200-1 and 200-2 and a communication unit 200C having a communication port.

The CPU unit 100 has a communication port 150 for transmitting and receiving communication frames and the communication unit 200C has a communication port 150C for transmitting and receiving communication frames. A communication protocol supported by the communication port 150 of the CPU unit 100 may be identical to or different from a communication protocol supported by the communication port 150C of the communication unit 200C.

In the example of the configuration shown in FIG. 20, the communication unit 200-1 transmits/receives communication frames to/from a communication device 300-2 using the communication port 150 of the CPU unit 100 and transmits/receives communication frames to/from a communication device 300-5 using the communication port 150C of the communication unit 200C, for example.

In this case, the communication unit 200-1 transmits communication frames to the CPU unit 100 through the internal bus 40 and transmits communication frames to the communication unit 200C through the internal bus 40.

In the CPU unit 100, communication frames from the communication unit 200-1 are relayed to the communication device 300-2 according to the data exchange information 180. On the other hand, in the communication unit 200C, communication frames from the communication unit 200-1 are relayed to the communication device 300-5 according to data exchange information 180C.

The basic configuration and process of the control system 1C according to the third modified example of the present embodiment are the same as those of the control system 1 according to the present embodiment and thus detailed description thereof is not repeated.

As described above, in the control system 1C according to the third modified example of the present embodiment, transmission of communication frames can be realized using communication ports of physically different communication units included in the control system 1C.

### <E. Setting user interface>

Next, an example of a user interface for setting the data exchange information 180 and the connection management information 182 used in the control system according to the present embodiment will be described.

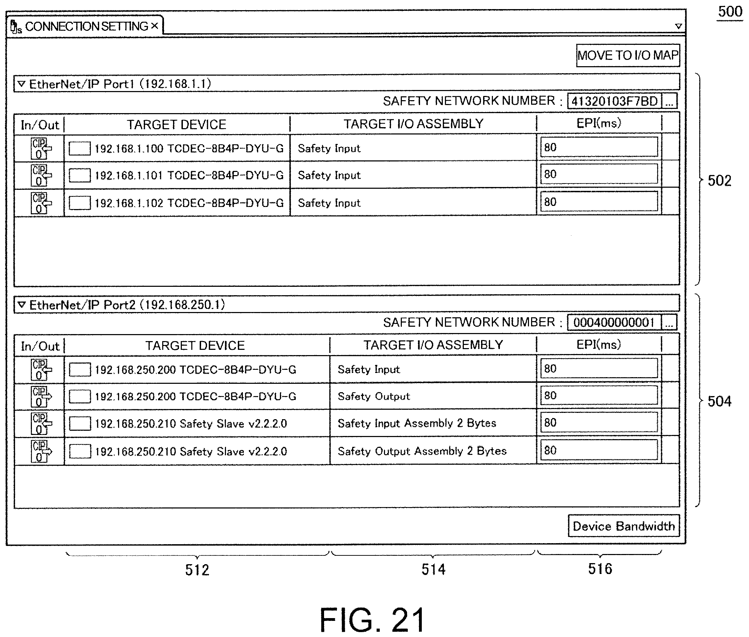

FIG. 21 is a diagram showing an example of a setting user interface in the control system according to the present embodiment. A user interface screen 500 shown in FIG. 21 may be provided on a support device connected to the CPU unit 100.

For example, a configuration in which two communication ports 150 and 150A are disposed in the CPU unit 100, as shown in FIG. 15, is assumed. It is assumed that an IP address of a communication device 300-1 which is a communication destination connected to the communication port 150 at one side is "192. 168. 1. 100" (communication protocol: Ethernet/IP Safety) and an IP address of a communication device 300-3 which is a communication destination connected to the communication port 150A at the other side is "192. 168. 250. 200" (communication protocol: Profinet Safety).

As an example, an operation procedure for setting data which is an information sources of the data exchange information 180 and the connection management information 182 is as follows.
(1) Connection setting for performing relaying of communication frames is performed on the user interface screen as shown in FIG. 21.
(2) A message addressed to the communication device 300-1 is allocated to the communication port 150 of the CPU unit 100 which relays communication frames on the user interface screen as shown in FIG. 21.
(3) A message addressed to the communication device 300-3 is allocated to the communication port 150A of the CPU unit 100 which relays communication frames on the user interface screen as shown in FIG. 21.
(4) A project including a user program and a setting file is built and the data exchange information 180 is generated.
(5) The user program and the setting file are downloaded to the CPU unit 100 and the communication unit 200.

Referring to FIG. 21, the user interface screen 500 includes setting regions 502 and 504 which are arranged for each communication port provided in the CPU unit 100. Each of the setting regions 502 and 504 includes a target device setting region 512 for setting a communication device 300 connected through a corresponding communication port, a target assembly setting region 514 for setting a target to/from which communication frames are actually transmitted/received, and a communication period setting region 516.

The target device setting region 512 corresponds to a list of communication ports which can be used in the CPU unit 100 which is a target. Data which is an information source of the connection management information 182 is generated by allocating a communication device which is a communication target to each target device setting region 512 through a tool box which is not shown.

An IP address indicating a destination, a communication period (packet interval) and the like may be set and changed for connection (that is, assigned connection) between the CPU unit 100 and a communication device which is a communication target.

Meanwhile, a list of communication devices which can be used in the CPU unit 100 may be displayed in the tool box which is not shown. When the tool box is displayed side by side with the user interface screen 500, it is possible to set a connection by dragging and dropping a communication device which is a target to the target device setting region 512.

Furthermore, types of communication protocols which can be used at each communication port, sizes of transmitted messages, and the like may be set and changed on the user interface screen 500.

A communication path through which communication frames are relayed (bridged) can be determined by performing various assignments using the user interface screen 500 as shown in FIG. 21. In addition, control information and the data exchange information 180 of a communication frame are generated for the determined communication path.

When the user interface screen 500 as shown in FIG. 21 is provided, a user can easily perform setting for relaying (bridging) communication frames in the CPU unit 100 according to an intuitive operation.

### <F. Supplementary notes>

The present embodiment described above includes the following technical ideas.

### [Configuration 1]

A control system 1, 1A, 1B and 1C for controlling a control target includes a first unit 100, 100A and 100B having a first communication port 150 for transmitting and receiving data and one or a plurality of second units 200 electrically connected to the first unit, wherein each of the second units includes a logical communication unit 270 for transmitting/receiving data to/from a device electrically connected to the first communication port of the first unit, and the first unit includes a forwarding processing unit 102 which forwards transmission data transmitted from the second unit to a device which is a transmission destination.

### [Configuration 2]

The forwarding processing unit forwards reception data received from any device 300 to a second unit 200 which is a transmission destination of the reception data in the control system described in configuration 1.

### [Configuration 3]

The first unit and the one or the plurality of the second units include data communication units 130 and 220 for performing data exchange in each predetermined period. When transmission data to be newly transmitted is generated, the logical communication unit adds, control information 404 having different contents from control information added to previously generated transmission data, and performs data exchange with the first unit in the control system described in configuration 1 or 2.

### [Configuration 4]

When transmission data to be newly transmitted is generated, the logical communication unit generates new control information by incrementing or decrementing a value of the control information added to the previously generated transmission data in the control system described in configuration 3.

### [Configuration 5]

The first unit includes a first storage region 138 in which data exchanged with the one or the plurality of the second units is stored and a second storage region 128 in which data transmitted/received to/from the device through the first communication port is stored, and the forwarding processing unit performs data exchange between the first storage region and the second storage region according to predetermined data exchange information 180 in the control system described in configuration 3 or 4.

### [Configuration 6]

When reception data is received from any device, the forwarding processing unit adds control information 454 having different contents from control information added to previously received reception data to the received reception data and performs data exchange with the second unit which is a transmission destination of the reception data in the control system described in configuration 5.

### [Configuration 7]

The first unit further includes a second communication port 150A that is for transmitting/receiving data and different from the first communication port, and a communication protocol for transmitting and receiving data through the first communication port differs from a communication protocol for transmitting and receiving data through the second communication port in the control system described in configuration 6.

### [Configuration 8]

The first unit further includes a third storage region 128A in which data transmitted/received to/from the device through the second communication port is stored, and the forwarding processing unit selectively exchanges data of the first storage region between the second storage region and the third storage region according to predetermined data exchange information 180A in the control system described in configuration 7.

### [Configuration 9]

The first unit further includes a third storage region 128B in which data transmitted/received to/from the device through the second communication port 150B is stored, and the forwarding processing unit performs data exchange between the second storage region and the third storage region according to predetermined data exchange information 180B in the control system described in configuration 7.

### [Configuration 10]

A control device 100 constituting a control system for controlling a control target includes: a communication port 150 for transmitting and receiving data; a data communication unit 130 for performing data exchange with one or more communication units 200 in each predetermined period, wherein each of the communication units includes a logical communication unit 270 for transmitting/receiving data to/from a device electrically connected to the communication port; and a forwarding processing unit 102 which forwards transmission data transmitted from the communication unit to the device which is a transmission destination.

### <G. Conclusion>

According to the present embodiment, a data (communication frame) relaying function (bridge function) is installed in the CPU unit 100 and thus other communication units 200 can perform communication using a communication port provided in the CPU unit 100. By employing this configuration, system simplification and reduction of development costs of the communication units 200 and the like can be realized without the necessity of installing a communication function in each of the communication units 200.

According to the present embodiment, a user is able to freely set a path defined as a data (communication frame) relaying function (bridge function) in the CPU unit 100. Accordingly, it is possible to forward communication frames to different networks or different communication ports by bridging communication frames according to a plurality of communication protocols without depending on communication protocols and the like, thereby constructing more flexible systems.

According to the present embodiment, each of the communication units 200 can have an application execution environment, and various processes and functions can be provided according to such an application execution environment independently of execution of a user program in the CPU unit 100. Accordingly, it is possible to realize a highly flexible autonomous distributed system in which each unit autonomously performs a task assigned thereto by constructing a control system including the CPU unit 100 and the one or more communication units 200.

### [Reference Signs List]

1, 1A, 1B, 1C, 1X Control system
40 Internal bus
42 Downlink
44 Uplink
100, 100A, 100B, 100X CPU
102, 202 Processor
104, 204 Flash memory
106, 216 System program
108 Configuration information
110 RAM
120 Network communication unit
122 Network controller
124 Transmission/reception circuit
128, 128A, 128B, 138, 138A, 208 Shared memory
128R, 138R, 208R Reception buffer
128T, 138T, 208T Transmission buffer
130, 220 Internal bus communication unit
132 Internal bus controller
134 Transmission circuit
136 Reception circuit
150, 150A, 150B, 150C, 250X Communication port
180, 180A, 180B, 180C Data exchange information
182 Connection management information
200, 200C, 200X Communication unit
206 Functional module
218 Application program
230R, 240R Reception unit
230T, 240T Transmission unit
232, 242 De-serializer (DES)
234,244 Forwarding controller
236, 246 Serializer (SER)
250 Reception processing unit
252 Decoding unit
254 CRC check unit
260 Transmission processing unit
262 CRC genration unit
264 Encoding unit
270 Logical communication unit
300 Communication device
340 Coupler unit
402, 412, 422, 432, 442, 452, 462, 472 Communication frame
404, 414, 424, 444, 454, 464, 474 Control information
500 User interface screen
502, 504 Setting region
512 Target device setting region
514 target assembly setting region
516 Communication period setting region
1222 Application protocol stack
1224 Protocol stack
1226 Physical layer driver

## Claims

1. A control system (1) for controlling a control target, comprising:
a control device (100), having a first communication port (150) for transmitting and receiving data; and
one or a plurality of communication units (200), electrically connected to the control device (100),
wherein each of the communication units (200) includes a logical communication unit (270) configured for transmitting/receiving data to/from a plurality of devices (300) electrically connected to the first communication port (150) of the control device (100),
wherein the control device (100) includes a forwarding processing unit (102) that is configured to forward transmission data transmitted from the one of the communication units (200) to one of the plurality of devices (300) which is a transmission destination of the transmission data and to forward reception data received from any device (300) to one of the communication units (200) which is a transmission destination of the reception data,
wherein the control device (100) and the one or the plurality of the communication units (200) include data communication units (130, 220) configured for performing data exchange in each predetermined period,
wherein each
logical communication unit (270) is configured so that, when the transmission data to be newly transmitted is generated, the logical communication unit (270) adds control information to the transmission data, which control information has different contents from control information added to previously generated transmission data, and performs data exchange with the control device (100), and
wherein the control device (100) further includes:
a first storage region (138) configured to store data exchanged with the plurality of the communication units (200), and
a second storage region (128) configured to store data transmitted/received to/from any one of the plurality of devices (300) through the first communication port (150),
wherein the forwarding processing unit (102) is configured to perform data exchange between the first storage region (138) and the second storage region (128) according to predetermined data exchange information (180),
**characterized in that** in the first storage region (138) and the second storage region (128), positions are respectively allocated to each communication unit (200), whereby the data exchanged with each communication unit (200) is stored in the corresponding position,
wherein the data exchange information (180) defines whether data stored in one of the positions of the first memory region (138) corresponds to data stored at an any one of the positions of the second memory region (128), and defines whether data stored in one of the positions of the second memory region (128) corresponds to data stored at any one of the positions of the first memory region (138), and
wherein the data exchange comprises a process of writing the transmission data, present in one of the positions of the first memory region (138) and transmitted from a respective communication unit (200) associated with the one position, at an appropriate position of the positions of the second memory region (128), and a process of writing the reception data, stored in one of the positions of the second memory region (128) and directed to the transmission destination of the reception data, at an appropriate position of the positions of the first memory region (138).

2. The control system (1) according to claim 1, wherein each logical communication unit (270) is configured so that, when the transmission data to be newly transmitted is generated, the logical communication unit (270) generates the new control information to be added to the transmission data to be newly transmitted by incrementing or decrementing a value of the control information added to the previously generated transmission data.

3. The control system (1) according to any one of claims 1 or 2, wherein the forwarding processing unit (102) is configured so that, when reception data is received from any device (300), the forwarding processing unit (102) adds control information (454) to the received reception data, which control information has different contents from control information added to the previously received reception data, and
performs data exchange with the one of the communication units (200) which is the transmission destination of the reception data.

4. The control system (1) according to claim 3, wherein the control device (100) further includes a second communication port (150A, 150B) that is configured for transmitting/receiving data and different from the first communication port (150), and
a communication protocol for transmitting and receiving data through the first communication port (150) differs from a communication protocol for transmitting and receiving data through the second communication port (150A, 150B).

5. The control system (1) according to claim 4, wherein the control device (100) further includes a third storage region (128A) in which data transmitted/received to/from another device (300) through the second communication port (150A) is stored, and
the forwarding processing unit (102) is configured to selectively exchange data of the first storage region (138) between the second storage region (128) and the third storage region (128A) according to the predetermined data exchange information (180A).

6. The control system (1) according to claim 4, wherein the control device (100) further includes a third storage region (128B) in which data transmitted/received to/from another device (300) through the second communication port (150B) is stored, and
the forwarding processing unit (102) is configured to perform data exchange between the second storage region (138) and the third storage region (128B) according to the predetermined data exchange information (180B).

7. A control device (100) constituting a control system (1) for controlling a control target, **characterized in that** the control device (100) comprises:
a communication port (150) configured for transmitting and receiving data;
a data communication unit (130) configured for performing data exchange with one or a plurality of communication units (200) in each predetermined period, each of the communication units (200) including a logical communication unit (270) for transmitting/receiving data to/from a plurality of devices (300) electrically connected to the communication port (150); and
a forwarding processing unit (102) which is configured to forward transmission data transmitted from one of the plurality of the communication units (200) to one of the devices (300) which is a transmission destination of the transmission data and to forward reception data received from any device (300) to one of the communication units (200) which is a transmission destination of the reception data,
wherein the control device (100) further includes:
a first storage region (138) configured to store data exchanged with the plurality of the communication units (200), and
a second storage region (128) configured to store data transmitted/received to/from any one of the devices (300) through the first communication port (150),
wherein the forwarding processing unit (102) is configured to perform data exchange between the first storage region (138) and the second storage region (128) according to predetermined data exchange information (180),
**characterized in that** in the first storage region (138) and the second storage region (128), positions are respectively allocated to each communication unit (200), whereby the data exchanged with each communication unit (200) is stored in the corresponding position,
wherein the data exchange information (180) defines whether data stored in one of the positions of the first memory region (138) corresponds to data stored at an any one of the positions of the second memory region (128), and defines whether data stored in one of the positions of the second memory region (128) corresponds to data stored at any one of the positions of the first memory region (138), and
wherein the data exchange comprises a process of writing the transmission data, present in one of the positions of the first memory region (138) and transmitted from a respective communication unit (200) associated with the one position, at an appropriate position of the positions of the second memory region (128), and a process of writing the reception data, stored in one of the positions of the second memory region (128) and directed to the transmission destination of the reception data, at an appropriate position of the positions of the first memory region (138).

## Patentansprüche

1. Steuersystem (1) zur Steuerung eines Steuerziels, das umfasst:
ein Steuergerät (100) mit einem ersten Kommunikationsanschluss (150) zum Übertragen und Empfangen von Daten und
eine oder eine Vielzahl von Kommunikationseinheiten (200), elektrisch verbunden mit dem Steuergerät (100),
wobei jede der Kommunikationseinheiten (200) eine logische Kommunikationseinheit (270) enthält, die konfiguriert ist, für das Übertragen/Empfangen von Daten an/von einer Vielzahl von Geräten (300), die elektrisch mit dem ersten Kommunikationsanschluss (150) des Steuergeräts (100) verbunden ist, wobei das Steuersystem (1) enthält,
eine Weiterleitungsverarbeitungseinheit (102), die konfiguriert ist, um Übertragungsdaten, übertragen von der einen von Kommunikationseinheiten (200), an eines der Vielzahl von Geräten (300) weiterzuleiten, das ein Übertragungsziel der Datenübertragung ist und um Empfangsdaten, empfangen von einem Gerät (300) an eine der Kommunikationseinheiten (200) weiterzuleiten, die ein Übertragungsziel der Empfangsdaten ist, wobei das Steuergerät (100) und die eine oder die Vielzahl von Kommunikationseinheiten (200) Datenkommunikationseinheiten (130, 220) enthält, konfiguriert, um Datenaustausch in jeder vorgegebenen Periode durchzuführen, wobei jede logischen Kommunikationseinheiten (270) konfiguriert ist, sodass wenn die Übertragungsdaten, die neu übertragen zu sind, erzeugt werden, die logische Kommunikationseinheit (270) Steuerinformationen an die Übertragungsdaten hinzufügt, wobei die Steuerinformationen verschiedene Inhalte von Steuerinformationen aufweist, hinzugefügt zu vorher erzeugten Übertragungsdaten, und Datenaustausch mit dem Steuergerät (100) durchführt, und
wobei das Steuergerät (100) ferner enthält:
einen ersten Speicherbereich (138), der konfiguriert ist, um Daten, ausgetauscht mit der Vielzahl von Kommunikationseinheiten (200), zu speichern, und
einen zweiten Speicherbereich (128), der konfiguriert ist, um Daten, übertragen/empfangen an/von einer von der Vielzahl von Geräten (300) durch den ersten Kommunikationsanschluss (150), zu speichern, wobei die Weiterleitungsverarbeitungseinheit (102) konfiguriert ist, um Datenaustausch zwischen dem ersten Speicherbereich (138) und dem zweiten Speicherbereich (128) entsprechend der vorgegebenen Datenaustauschinformationen (180), durchzuführen, **dadurch gekennzeichnet, dass** in dem ersten Speicherbereich (138) und dem zweiten Speicherbereich (128), Positionen jeweils zu jeder Kommunikationseinheit (200) zugeordnet werden, wodurch die Daten, ausgetauscht mit jeder Kommunikationseinheit (200) in jeder entsprechenden Position gespeichert werden, wobei die Datenaustauschinformationen (180) definieren, ob Daten, gespeichert in einer der Positionen des ersten Speicherbereichs (138) Daten entsprechen, gespeichert in einer der irgendeinen Positionen des zweiten Speicherbereich (128) und definiert, ob Daten, gespeichert in irgendeinen der Positionen des zweiten Speicherbereichs (128), Daten, gespeichert in irgendeinen der Positionen des ersten Speicherbereichs (138), entsprechen, und
wobei der Datenaustausch einen Prozess des Schreibens der Übertragungsdaten, vorhanden in einer der Positionen des ersten Speicherbereichs (138) und übertragen von einer entsprechenden Kommunikationseinheit (200), assoziiert mit der einen Position, an einer geeigneten Position der Positionen des ersten Speicherbereichs (128), und einen Prozess des Schreibens der Empfangsdaten umfasst, gespeichert in einer der Positionen des zweiten Speicherbereichs (128) und gerichtet an das Übertragungsziel der Empfangsdaten, an einer geeigneten Position der Positionen des ersten Speicherbereichs (138).

2. Steuersystem (1) nach Anspruch 1, wobei jede logische Kommunikationseinheit (270) konfiguriert ist, so dass, wenn die Übertragungsdaten, die neu übertragen werden sollen, erzeugt werden, die logische Kommunikationseinheit (270) die neuen Steuerinformationen erzeugt, die hinzugefügt werden sollen, zu den Übertragungsdaten durch inkrementieren und dekrementieren eines Werts der Steuerinformationen, hinzugefügt zu den vorher erzeugten Übertragungsdaten.

3. Steuersystem (1) nach Anspruch 1 oder 2, wobei bei die Weiterleitungsverarbeitungseinheit (102) konfiguriert ist, so dass, wenn Empfangsdaten von einem Gerät (300) empfangen wird, die Weiterleitungsverarbeitungseinheit (102) Steuerinformationen (454) hinzufügt zu den empfangenen Empfangsdaten, wobei die Steuerinformation verschiedene Inhalte von den Steuerinformationen, hinzugefügt zu den vorher empfangenen Empfangsdaten, aufweist und Datenaustausch mit der einer der Kommunikationseinheiten (200) durchführt, die das Übertragungsziel der Empfangsdaten ist.

4. Steuersystem (1) nach Anspruch 3, wobei das Steuergerät (100) ferner einen zweiten Kommunikationsanschluss (150A, 150B) enthält, der konfiguriert ist, um Daten zu übertragen/empfangen, und der sich von dem ersten Kommunikationsanschluss (150) unterscheidet, und
ein Kommunikationsprotokoll zum Übertragen/Empfangen von Daten über den ersten Kommunikationsanschluss (150) sich von einem Kommunikationsprotokoll zum Übertragen und Empfangen von Daten über den zweiten Kommunikationsanschluss (150A, 150B) unterscheidet.

5. Steuersystem (1) nach Anspruch 4, wobei das Steuergerät (100) ferner einen dritten Speicherbereich (128A) enthält, in dem Daten, übertragen/empfangen an/von einem anderen Gerät (300) durch den zweiten Kommunikationsanschluss (150A), gespeichert werden, und
die Weiterleitungsverarbeitungseinheit (102) konfiguriert ist, um selektiv Daten des ersten Speicherbereichs (138) zwischen dem zweiten Speicherbereich (128) und dem dritten Speicherbereich (128A) gemäß den vorbestimmten Datenaustauschinformationen (180A) auszutauschen.

6. Steuersystem (1) nach Anspruch 4, wobei das Steuergerät (100) ferner einen dritten Speicherbereich (128B) enthält, in dem Daten, übertragen/empfangen an/von einem anderen Gerät (300) über den zweiten Kommunikationsanschluss (150B), gespeichert werden, und
die Weiterleitungsverarbeitungseinheit (102) konfiguriert ist, um Datenaustausch zwischen dem zweiten Speicherbereich (138) und dem dritten Speicherbereich (128B) gemäß den vorbestimmten Datenaustauschinformationen (180B) durchzuführen.

7. Steuergerät (100), das ein Steuersystem (1) zum Steuern eines Steuerziels bildet, **dadurch gekennzeichnet, dass** das Steuergerät (100) umfasst:
einen Kommunikationsanschluss (150), der zum Übertragen und Empfangen von Daten konfiguriert ist;
eine Datenkommunikationseinheit (130), die zum Durchführen eines Datenaustauschs mit einer oder einer Vielzahl von Kommunikationseinheiten (200) in jeder vorbestimmten Periode konfiguriert ist, wobei jede der Kommunikationseinheiten (200) eine logische Kommunikationseinheit (270) zum Übertragen/Empfangen von Daten an/von einer Vielzahl von Geräten (300) enthält, elektrisch verbunden mit dem Kommunikationsanschluss (150); und
eine Weiterleitungsverarbeitungseinheit (102), die konfiguriert ist, um Übertragungsdaten, übertragen von einer der Vielzahl von Kommunikationseinheiten (200), an eines der Geräte (300) weiterzuleiten, das ein Übertragungsziel der Übertragungsdaten ist, und um Empfangsdaten, empfangen von einem Gerät (300), an eine der Kommunikationseinheiten (200) weiterzuleiten, die ein Übertragungsziel der Empfangsdaten ist,
wobei das Steuergerät (100) ferner enthält:
einen ersten Speicherbereich (138), der konfiguriert ist, um Daten, ausgetauscht mit der Vielzahl der Kommunikationseinheiten (200) zu speichern, und
einen zweiten Speicherbereich (128), der konfiguriert ist, um Daten, übertragen/empfangen an/von irgendeinem Gerät (300) zu speichern, über den ersten Kommunikationsanschluss (150),
wobei die Weiterleitungsverarbeitungseinheit (102) konfiguriert ist, um zwischen dem ersten Speicherbereich (138) und dem zweiten Speicherbereich (128) gemäß vorbestimmten Datenaustauschinformationen (180) Datenaustausch durchzuführen, **dadurch gekennzeichnet, dass** in dem ersten Speicherbereich (138) und dem zweiten Speicherbereich (128) Positionen jeweils jeder Kommunikationseinheit (200) zugewiesen sind, wodurch die Daten, ausgetauscht mit jeder Kommunikationseinheit (200) an der entsprechenden Position gespeichert werden,
wobei die Datenaustauschinformationen (180) definieren, ob Daten, die in einer der Positionen des ersten Speicherbereichs (138) gespeichert sind, Daten entsprechen, die an einer der irgendeinen der Positionen des zweiten Speicherbereichs (128) gespeichert sind, und definiert, ob Daten, die in einer der Positionen des zweiten Speicherbereichs (128) gespeichert sind, Daten entsprechen, die an irgdeinenen der Positionen des ersten Speicherbereichs (138) gespeichert sind, und
wobei der Datenaustausch umfasst einen Prozess des Schreibens der Übertragungsdaten, die in einer der Positionen des ersten Speicherbereichs (138) vorhanden sind und von einer entsprechenden Kommunikationseinheit (200), die mit der einen Position assoziiert ist, übertragen werden, in eine geeignete Position der Positionen des zweiten Speicherbereichs (128) und einen Prozess des Schreibens der Empfangsdaten, die in einer der Positionen des zweiten Speicherbereichs (128) gespeichert sind und an das Übertragungsziel der Empfangsdaten gerichtet sind, in eine geeignete Position der Positionen des ersten Speicherbereichs (138).

## Revendications

1. Système de commande (1) pour commander une cible de commande, comprenant :
un dispositif de commande (100), comportant un premier port de communication (150) pour transmettre et recevoir des données ; et
une ou plusieurs unités de communication (200), reliées électriquement au dispositif de commande (100),
dans lequel chacune des unités de communication (200) inclut une unité de communication logique (270) configurée pour transmettre/recevoir des données à/depuis une pluralité de dispositifs (300) reliés électriquement au premier port de communication (150) du dispositif de commande (100),
dans lequel le dispositif de commande (100) inclut une unité de traitement de transfert (102) qui est configurée pour transférer des données de transmission transmises depuis l'une des unités de communication (200) à l'un de la pluralité de dispositifs (300) qui est une destination de transmission des données de transmission et pour transférer des données de réception reçues depuis tout dispositif (300) à l'une des unités de communication (200) qui est une destination de transmission des données de réception,
dans lequel le dispositif de commande (100) et les une ou plusieurs unités de communication (200) incluent des unités de communication de données (130, 220) configurées pour réaliser un échange de données dans chaque période prédéterminée,
dans lequel chaque unité de communication logique (270) est configurée de sorte que, lorsque les données de transmission à transmettre nouvellement sont générées, l'unité de communication logique (270) ajoute des informations de commande aux données de transmission, lesdites informations de commande comportant des contenus différents de ceux des informations de commande ajoutées aux données de transmission générées précédemment, et réalise un échange de données avec le dispositif de commande (100), et
dans lequel le dispositif de commande (100) inclut en outre :
une première région de stockage (138) configurée pour stocker des données échangées avec la pluralité d'unités de communication (200), et
une deuxième région de stockage (128) configurée pour stocker des données transmises/reçues à/depuis l'un quelconque de la pluralité de dispositifs (300) par l'intermédiaire du premier port de communication (150) ,
dans lequel l'unité de traitement de transfert (102) est configurée pour réaliser un échange de données entre la première région de stockage (138) et la deuxième région de stockage (128) en fonction d'informations d'échange de données prédéterminées (180),
**caractérisé en ce que**
dans la première région de stockage (138) et la deuxième région de stockage (128), des positions sont allouées respectivement à chaque unité de communication (200), de telle manière que les données échangées avec chaque unité de communication (200) soient stockées dans la position correspondante,
dans lequel les informations d'échange de données (180) définissent si des données stockées dans l'une des positions de la première région de mémoire (138) correspondent à des données stockées à l'une quelconque des positions de la deuxième région de mémoire (128), et définissent si des données stockées dans l'une des positions de la deuxième région de mémoire (128) correspondent à des données stockées à l'une quelconque des positions de la première région de mémoire (138), et
dans lequel l'échange de données comprend un processus d'écriture des données de transmission, présentes dans l'une des positions de la première région de mémoire (138) et transmises depuis une unité de communication (200) respective associée à l'une position, à une position appropriée parmi les positions de la deuxième région de mémoire (128), et un processus d'écriture des données de réception, stockées dans l'une des positions de la deuxième région de mémoire (128) et dirigées vers la destination de transmission des données de réception, à une position appropriée parmi les positions de la première région de mémoire (138).

2. Système de commande (1) selon la revendication 1, dans lequel chaque unité de communication logique (270) est configurée de sorte que, lorsque les données de transmission à transmettre nouvellement sont générées, l'unité de communication logique (270) génère les nouvelles informations de commande à ajouter aux données de transmission à transmettre nouvellement par l'incrémentation ou la décrémentation d'une valeur des informations de commande ajoutées aux données de transmission générées précédemment.

3. Système de commande (1) selon la revendication 1 ou 2, dans lequel l'unité de traitement de transfert (102) est configurée de sorte que, lorsque des données de réception sont reçues depuis tout dispositif (300), l'unité de traitement de transfert (102) ajoute des informations de commande (454) aux données de réception reçues, lesdites informations de commande comportant des contenus différents de ceux des informations de commande ajoutées aux données de réception reçues précédemment, et
réalise un échange de données avec l'une des unités de communication (200) qui est la destination de transmission des données de réception.

4. Système de commande (1) selon la revendication 3, dans lequel le dispositif de commande (100) inclut en outre un deuxième port de communication (150A, 150B) qui est configuré pour transmettre/recevoir des données et qui est différent du premier port de communication (150), et
un protocole de communication pour transmettre et recevoir des données par l'intermédiaire du premier port de communication (150) diffère d'un protocole de communication pour transmettre et recevoir des données par l'intermédiaire du deuxième port de communication (150A, 150B).

5. Système de commande (1) selon la revendication 4, dans lequel le dispositif de commande (100) inclut en outre une troisième région de stockage (128A) dans laquelle des données transmises/reçues à/depuis un autre dispositif (300) par l'intermédiaire du deuxième port de communication (150A) sont stockées, et
l'unité de traitement de transfert (102) est configurée pour échanger sélectivement des données de la première région de stockage (138) entre la deuxième région de stockage (128) et la troisième région de stockage (128A) en fonction des informations d'échange de données prédéterminées (180A).

6. Système de commande (1) selon la revendication 4, dans lequel le dispositif de commande (100) inclut en outre une troisième région de stockage (128B) dans laquelle des données transmises/reçues à/depuis un autre dispositif (300) par l'intermédiaire du deuxième port de communication (150B) sont stockées, et
l'unité de traitement de transfert (102) est configurée pour réaliser un échange de données entre la deuxième région de stockage (138) et la troisième région de stockage (128B) en fonction des informations d'échange de données prédéterminées (180B).

7. Dispositif de commande (100) constituant un système de commande (1) pour commander une cible de commande, **caractérisé en ce que** le dispositif de commande (100) comprend :
un port de communication (150) configuré pour transmettre et recevoir des données ;
une unité de communication de données (130) configurée pour réaliser un échange de données avec une ou
plusieurs unités de communication (200) dans chaque période prédéterminée, chacune des unités de communication (200) incluant une unité de communication logique (270) pour transmettre/recevoir des données à/depuis une pluralité de dispositifs (300) reliés électriquement au port de communication (150) ; et
une unité de traitement de transfert (102) qui est configurée pour transférer des données de transmission transmises depuis l'une de la pluralité d'unités de communication (200) à l'un des dispositifs (300) qui est une destination de transmission des données de transmission et pour transférer des données de réception reçues depuis tout dispositif (300) à l'une des unités de communication (200) qui est une destination de transmission des données de réception,
dans lequel le dispositif de commande (100) inclut en outre :
une première région de stockage (138) configurée pour stocker des données échangées avec la pluralité d'unités de communication (200), et
une deuxième région de stockage (128) configurée pour stocker des données transmises/reçues à/depuis l'un quelconque des dispositifs (300) par l'intermédiaire du premier port de communication (150), dans lequel l'unité de traitement de transfert (102) est configurée pour réaliser un échange de données entre la première région de stockage (138) et la deuxième région de stockage (128) en fonction d'informations d'échange de données prédéterminées (180),
**caractérisé en ce que**
dans la première région de stockage (138) et la deuxième région de stockage (128), des positions sont allouées respectivement à chaque unité de communication (200),
de telle manière que les données échangées avec chaque unité de communication (200) soient stockées dans la position correspondante,
dans lequel les informations d'échange de données (180) définissent si des données stockées dans l'une des positions de la première région de mémoire (138) correspondent à des données stockées à l'une quelconque des positions de la deuxième région de mémoire (128),
et définissent si des données stockées dans l'une des positions de la deuxième région de mémoire (128) correspondent à des données stockées à l'une quelconque des positions de la première région de mémoire (138), et
dans lequel l'échange de données comprend un processus d'écriture des données de transmission, présentes dans l'une des positions de la première région de mémoire (138) et transmises depuis une unité de communication (200) respective associée à l'une position, à une position appropriée parmi les positions de la deuxième région de mémoire (128), et un processus d'écriture des données de réception, stockées dans l'une des positions de la deuxième région de mémoire (128) et dirigées vers la destination de transmission des données de réception, à une position appropriée parmi les positions de la première région de mémoire (138).
